# EUROPÄISCHE PATENTANMELDUNG

(11) **EP 4 112 590 A1**
(43) Veröffentlichungstag der Anmeldung: **04.01.2023**
(21) Anmeldenummer: 21182799.3
(22) Anmeldetag: 30.06.2021
(51) Int. Cl.: C05B 17/00, C05D 9/00, C05F 17/10

(54) **NÄHRSTOFFREICHES BODENSUBSTRAT, HERSTELLUNGSVERFAHREN UND VERWENDUNG**

(71) Anmelder: Pontes pabuli GmbH, 04107 Leipzig (DE)
(72) Erfinder: HAGER, Frank-Thoralf, 04109 Leipzig (DE)
(74) Vertreter: Hertin und Partner Rechts- und Patentanwälte PartG mbB

(57) **Zusammenfassung**

Die Erfindung betrifft ein nährstoffreiches Bodensubstrat, ein Herstellungsverfahren dafür, sowie ein nährstoffreiches Bodensubstrat, das zur Nährstoffzufuhr und Pedosphärenverbesserung in der Land-, Forstwirtschaft und/oder im Gartenbau verwendet werden kann.

## Beschreibung

Die Erfindung betrifft ein nährstoffreiches Bodensubstrat, ein Herstellungsverfahren dafür, sowie ein nährstoffreiches Bodensubstrat, das zur Nährstoffzufuhr und Pedosphärenverbesserung in der Land-, Forstwirtschaft und/oder im Gartenbau verwendet werden kann.

### Stand der Technik

Häufig ist die landwirtschaftliche Nutzung von Ackerböden mit einer humuszehrenden Wirkung und dem Entzug des Bodens von Nährstoffen verbunden. Ein ausreichender Gehalt an Humus (organische Bodensubstanz) und notwendigen Nährstoffen sind jedoch die Voraussetzung für die nachhaltige natürliche Bodenfruchtbarkeit, denn der Humus beeinflusst viele Bodeneigenschaften, die auf die Ertragsfähigkeit, die Bearbeitbarkeit, die Erosionsanfälligkeit und die Filter- und Pufferfunktion einwirken und müssen entsprechend durch anschließende Zufuhr durch organische Substanzen und Nährstoffen wieder ausgeglichen werden.

Mit der stofflichen und energetischen Nutzung von Biomasse, wie beispielsweise aus Haushaltsabfallen oder Klärschlamm, ist ein Entzug von Nährstoffen und erhebliche Mengen an organischer Substanz aus den natürlichen Stoffkreisläufen verbunden. Entzogene Nährstoffe, wie beispielsweise Phosphat, Kalium oder Stickstoff, werden oft durch mineralische Dünger zugeführt. Der Einsatz von künstlichem Mineraldünger aus fossilen Ressourcen ist ökologisch kritisch zu bewerten, zum einen aufgrund des umweltzerstörerischen Abbaus und zum anderen aufgrund des Schwermetalleintrags auf die Böden durch Mineraldünger. Zudem ist beispielsweise Phosphor ein limitierter Rohstoff und seine effiziente Nutzung für einen fruchtbaren Boden vor dem Hintergrund einer wachsenden Weltbevölkerung ist von großer Bedeutung. Unter Gesichtspunkten der Nachhaltigkeit rückt die Schließung von natürlichen Nährstoffkreisläufen immer mehr in den Vordergrund und bietet zudem eine einheimische bisher nur bedingt genutzte Rohstoffquelle.

Zum Ausgleich entzogener organischer Substanzen werden häufig organische Reststoffe, wie beispielsweise Klärschlamm, Gärreste oder Gülle, als prinzipiell kostengünstige und nachhaltige Alternative und damit zur Schließung des Nährstoffkreislaufs zugeführt. So werden diese organischen Reststoffe zum Teil auch noch immer direkt auf Felder ausgebracht. Seit geraumer Zeit sinkt die Akzeptanz für diesen Verwertungsweg jedoch progressiv, da das direkte Ausbringen zu unerwünschter Geruchsbelästigung führt und die hiermit verbundenen Kreisläufe in Verdacht stehen, zu einer unerwünschten Aufkonzentrierung bestimmter Schadstoffe zu führen, wie beispielsweise perfluorierter Tenside (PFT) und unterschiedliche Schwermetalle. Klärschlamm, der keiner hygienisierenden Behandlung unterworfen wurde, kann zudem eine Vielzahl seuchen- und phytohygienisch relevanter Krankheitserreger enthalten, wie Bakterien, Viren, Parasiten und Wurmeier. Sollen die organischen Reststoffe in der Landwirtschaft verwertet werden, so besteht grundsätzlich die Gefahr, dass Krankheitserreger über Nahrung und Futtermittel zu Mensch und Tier gelangen und diese damit gefährden.

Alternativ werden organische Abfälle kompostiert, wobei kleinste Mikroben die organischen Pflanzenteile zersetzen und damit für einen Abbauprozess sorgen. Bei der Herstellung von Kompost aus kommunalen Siedlungsabfällen findet meist ein Abtötungseffekt für Organismen, die bei Pflanzen, Tieren und Menschen Krankheiten hervorrufen können, statt. Dieser Abtötungseffekt kann als Hygienisierung bezeichnet und auf unterschiedliche Art und Weise realisiert werden. Da damit zwar Krankheitserreger abgetötet werden können, jedoch keine Schadstoffe entfernt werden, sind schadstoffbelastete organische Abfallstoffe auch für eine Kompostierung weitgehend ungeeignet.

### Zugabe von Nährstoffen bei Kompostierung im Stand der Technik

Aktuell gewinnt die thermische Verwertung organischer Reststoffe weiter an Bedeutung. Aschen aus der thermischen Verwertung und/oder Verbrennung organischer Reststoffe sind aufgrund des hohen Gehalts an Nährstoffen, wie beispielsweise Phosphor (P), Kalium (K), Calcium (Ca), und lebensnotwendiger Spurenstoffe geeignete Rohstoffquellen. Allerdings werden auch die Schwermetalle aufkonzentriert und die Nährstoffe, insbesondere Phosphor, liegen häufig in einer unzureichenden Pflanzenverfügbarkeit vor. Aufgrund der schlechten Pflanzenverfügbarkeit des in den Aschen enthaltenen Phosphors (P) sowie der Schadstoffgehalte ist eine direkte Verwendung der Aschen als Düngemittel kaum möglich. Deshalb werden aktuell solche Aschen zumeist deponiert oder im Landschaftsbau verwendet und stehen somit den Stoffkreisläufen nicht mehr als Rohstoffquelle zur Verfügung.

Soll der Nährstoffgehalt dieser Asche zur Pflanzendüngung genutzt werden, muss die Pflanzenverfügbarkeit der Nährstoffe, insbesondere des Phosphates, durch eine geeignete Behandlung verbessert und Schadstoffe zumindest anteilig abgetrennt werden. Im Stand der Technik sind dazu unterschiedliche Verfahren, insbesondere zur stofflichen Verwertung von phosphorhaltigen Aschen, beispielsweise aus Klärschlamm, bekannt. Die Verfahren unterscheiden sich bezüglich der P-Abscheidung (Säure und Fällmittel), dem Recyclingprodukt und der Art der Schwermetallabscheidung und können allgemein in thermochemische, thermoelektrische und nasschemische Verfahren untergliedert werden.

Thermochemische oder thermoelektrische Verfahren nutzen im Grunde hohe Temperaturen, um flüchtige Schwermetalle (wie Arsen As, Cadmium Cd, Quecksilber Hg und Zink Zn), gegebenenfalls mit Unterstützung durch ein Alkalisalz oder Chlorgas, in die Gasphase zu bringen und auf diese Weise abzuscheiden. Die thermochemischen bzw. thermoelektrischen Verfahren sind verhältnismäßig energieaufwändig, erfordern eine komplexe Technologie und einen hohen Sicherheitsaufwand zur sicheren Handhabung. Die Löslichkeit der Phosphate in der resultierenden schwermetallentfrachteten Asche entspricht weitgehend einer Asche aus anderen Verbrennungsprozessen und ist allein daher ohne weitere Behandlung nicht als Düngemittel geeignet.

Bei den nasschemischen Verfahren werden zahlreiche unterschiedliche Konzepte verfolgt, wobei generell zwischen Verfahren, bei denen die Säure nur mit der Asche vermischt und daraus Düngemittel hergestellt wird, und Verfahren, bei welchem Phosphor aus der Asche extrahiert (Leaching-Verfahren) und damit in die flüssige Phase gebracht wird, unterschieden wird. Aus letzterem resultiert ein phosphathaltiges Endprodukt (z.B. Phosphorsäure, Calcium-Phosphat, in Kurzschreibweise Ca-Phosphat), welches als Düngemittel oder Düngemittelzusatz eingesetzt werden kann.

All diesen Leaching-Verfahren ist gemein, dass durch Vermischen der Asche mit Mineralsäure je nach Art und Konzentration der Mineralsäure sowie abhängig von der Prozessführung ein großer Teil des Phosphates der Asche gelöst wird, aber dennoch dabei ein erheblicher Anteil ungelöster Bestandteile zurückbleibt. Diese ungelösten Bestandteile sind Prozessrückstände, die teuer entsorgt werden müssen, obwohl auch darin noch Nährstoffkomponenten enthalten sind. Vorteilhaft bei diesen Verfahren ist hingegen, dass die gewonnene phosphathaltige Lösung zumindest teilweise von Schwermetallen befreit wird und diese Schwermetalle aus dem Prozess ausgeschleust werden. Allerdings wird bei diesen Verfahren anschließend die phosphathaltige Lösung sehr aufwendig und durch sehr komplexe Fällungs- bzw. Extraktionsprozesse weiterverarbeitet. Kostentreiber dabei ist der erhebliche Einsatz von zusätzlichen Chemikalien. Häufig entstehen dann Produkte, die nicht direkt zum Beispiel als Düngemittel verwendet werden können, sondern dann noch einmal weiterverarbeitet werden müssen.

Die nasschemischen Verfahren, bei denen im Grunde nur Asche mit Säure, insbesondere erdfeucht, vermischt wird, um daraus Düngemittel herzustellen, sind wirtschaftlich und auch technisch gut beherrschbar. Dabei wird das weitgehend unlösliche Phosphat aus phosphathaltigen Aschen mittels Mineralsäure aufgeschlossen. Solch ein Verfahren ist beispielsweise aus DE 10 2010 034 042 B4 bekannt. Das Verfahren stellt durch das Mischen von Aschen aus der Klärschlamm-Monoverbrennung mit Mineralsäure mit Zusatz eines Kalium- und/oder eines Stickstoffträgers ein Phosphat- bzw. Mehrnährstoff-Düngemittel her. Die Mineralsäure schließt dabei die schwerlöslichen Phosphatverbindungen in der Klärschlammasche auf. Dabei laufen die gewünschten Umwandlungsreaktionen und die Granulation weitgehend zeitgleich ab. Die Mischung, die Reaktion und die Granulation finden in einer Mischapparatur statt. Vorgeschlagen werden dazu Pflugscharmischer mit Messersatz, ein kontinuierlich arbeitender Durchlaufmischer oder ein Doppelwellenpaddelmischer. Bei dieser Art nasschemischer Verfahren, wie beispielsweise in DE 10 2010 034 042 B4 beschrieben, ist die resultierende Nährstoffzusammensetzung an die Boden- und Pflanzenbedürfnisse anpassbar. Jedoch werden in diesen Verfahren die Schwermetalle aus der Asche nicht abgeschieden, sondern gelangen vollständig in das Düngemittel und damit in den Nährstoffkreislauf. Zudem haben diese Verfahren erhebliche verfahrenstechnische Probleme bei der technischen Umsetzung, da beim Mischen der phosphathaltigen Aschen mit der Mineralsäure spontan ablaufende und zum Teil sehr exotherme Reaktionen stattfinden, die die gleichzeitige Granulation erheblich stören. Zudem ist das Gemisch aus Asche mit Säure oft besonders klebrig, was eine stabile Prozessführung deutlich erschwert und oft zu Prozessstörungen durch Anhaftung und Verstopfung von Anlagenteilen führt. Problematisch ist auch, dass Mineralsäuren sehr korrosiv sind und bei dieser Prozessführung viele Anlagenteile, zum Beispiel die Granuliereinheit, die Trocknungseinheit oder Verbindungsstrecken, damit in Kontakt kommen und entsprechend geschädigt werden.

Aus EP 3 037 396 A1 ist ein Verfahren zur Herstellung eines phosphathaltigen Düngemittels aus einer Asche oder einem Verkohlungsrückstand eines Schlamms aus einer Abwasserreinigung oder einer Abfallvergärung bekannt. Dabei wird eine Asche oder ein Verkohlungsrückstand mit einer mineralischen Säure vermischt und eine Inkubation der resultierenden Suspension in einem ersten Gefäß eingehalten. Danach erfolgen das Absondern von feuchten Feststoffen aus der Suspension und Ersetzen der abgesonderten Feststoffe durch weitere Asche oder weiteren Verkohlungsrückstand, das Vermischen der weiteren Asche oder des weiteren Verkohlungsrückstands mit der im ersten Gefäß verbleibenden mineralischen Säure und die Inkubation der resultierenden Suspension in dem ersten Gefäß. Der abgesonderte Feststoff wird in ein zweites Gefäß überführt und dort mit einer pH-neutralen, basischen oder gepufferten wässrigen Flüssigkeit vermischt, anschließend wird ein Teil der durch das Vermischen entstandenen Flüssigkeit aus dem zweiten Gefäß abgetrennt, die darin enthaltenen Schwermetallionen daraus abgesondert und dieser Flüssigkeit in das zweite Gefäß zurückgeführt. In EP 3 037 396 A1 wird somit im Prozessschritt 2 ein feuchter Feststoff abgetrennt, wobei die Lösung in Gefäß 1 verbleibt. Zu der verbleibenden Flüssigkeit im Gefäß 1 wird neue Asche zugeführt. Demnach wird in dem nachfolgenden Batch keine weitere Säure als Reaktionsmittel zugegeben. Ein Batch bezeichnet hierbei eine nächste Charge in einem diskontinuierlichen Betrieb bzw. einem Chargenprozess. Damit muss folglich die Säurestärke von Batch zu Batch und damit das Löse- bzw. Umwandlungspotential der Säure gegenüber dem Phosphat sinken. Kann die Säure aber das Phosphat in der Asche nicht mehr lösen, kann letztlich auch keine Umwandlung erfolgen. Nachteilig ist damit bei diesem Verfahren, dass die Phosphatlöslichkeit der Asche allenfalls im ersten Batch ausreichend erhöht wird, bei jedem weiteren Batch sinkt die Löslichkeit bis letztlich keine Veränderung gegenüber der Ausgangsasche erfolgt.

Weiterhin sind im Stand der Technik pedosphärenverbessernde Granulate beschrieben, die jedoch oft nachteilhaft wirken. Viele dieser bekannten Strukturen haben zwar eine positive Wirkung auf das Pflanzenwachstum, allerdings ist diese verbunden mit negativen Auswirkungen auf Kleinstlebewesen und Mikroorganismen. Es ist mehrfach beobachtet worden, dass durch Granulate des Standes der Technik beispielsweise die Anzahl der Regenwürmer zurückgeht und weiterhin weniger stickstoffassimilierende Mikroorganismen im Boden vorkommen. Während man in der Vergangenheit die Reduktion derartiger Bodenlebewesen für wenig relevant hielt, so weiß man heute, dass die genannten Organismen zentral für die Qualität der Böden sind. Insbesondere Böden, die stark wechselnden Witterungen ausgesetzt sind, wie beispielsweise hohen Temperaturen oder Starkregen, benötigen eine gesunde Biomasse, wie z. B. Insekten, Nematoden oder Anneliden, um auch bei stark schwankenden Wetterbedingungen hohe Erträge bei Pflanzen sicherzustellen.

### Aufgabe der Erfindung

Die Aufgabe der Erfindung ist es, die Nachteile des Standes der Technik zu beseitigen. Weiterhin liegt der Erfindung die Aufgabe zugrunde, neue und verbesserte nährstoffhaltige Bodensubstrate bereitzustellen, die die Pedosphäre in Bezug auf Bodenflora und Bodenfauna optimieren. Zur Bodenflora gehören überwiegend pflanzliche bzw. nicht tierische Organismen, wie z.B. Bakterien, Strahlenpilze, Pilze, Algen und Flechten. Die Bodenfauna setzt sich aus tierischen Einzellern und vielzelligen Organismen zusammen, die nach ihrer Größe differenziert werden in Mikrofauna (< 0,2 mm; z.B. Wimperntiere, Geißeltiere, Amöben, kleine Fadenwürmer), Mesofauna (< 2 mm; z.B. Springschwänze, Rädertiere, Milben), Makrofauna (> 2 mm; z.B. Borstenwürmer, Asseln, Insekten) und Megafauna (> 20 mm; z.B. Wirbeltiere wie Wühlmäuse, Spitzmäuse, Maulwurf). Die Optimierung betrifft vor allem zum einen das verbesserte Pflanzenwachstum, als auch das Wachstum der Bakterien, Geißeltierchen, Fadenwürmern, Anneliden oder Insekten und andere.
Der vorliegenden Erfindung liegt auch die Aufgabe zu Grunde, ein wirtschaftliches, ökologisches, flexibles, einfaches und technisch umsetzbares Verfahren zur Herstellung von nährstoffreichen Bodensubstraten mit exakt einstellbarer Nährstoffzusammensetzung bereitzustellen. Durch das erfindungsgemäße Verfahren sollen verschiedenste anorganische, phosphathaltige Aschen aus der Verbrennung, Vergasung oder Pyrolyse von organischen Substanzen effizient und kostengünstig zu einem Nährstoffsubstrat aufbereitet werden können, wobei die in den Aschen enthaltenen Nährstoffe und dabei insbesondere das Phosphat in eine pflanzenverfügbare Form überführt werden sollen und zumindest ein Teil der Schwermetalle abgetrennt werden können, wobei dieses Nährstoffsubstrat so konditioniert wird, dass es als Nährstoffquelle für Komposte besonders geeignet ist und wobei durch das Zusammenführen des Nährstoffsubstrates mit Kompost ein nährstoffreiches Bodensubstrat gebildet wird. Außerdem soll ein nährstoffhaltiges Bodensubstrat bereitgestellt werden, dass in der Landwirtschaft, in der Forstwirtschaft oder im Gartenbau als Pedoshärenverbesserer eingesetzt und/oder verwendet werden kann.

### Beschreibung der Erfindung

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist ein pedoshärenverbesserndes, nährstoffreiches Bodensubstrat vorgesehen, dass mit einem Verfahren hergestellt wird, das die folgenden Schritte umfasst:
a) Erzeugung einer Rohstoffdispersion durch das Vermischen mindestens einer phosphathaltigen Asche und mindestens eines Reaktionsmittels;
b) Bildung eines Nährstoffsubstrates durch Einhalten einer Inkubationszeit zwischen phosphathaltiger Asche und Reaktionsmittel von mindestens 10 Minuten
   ▪ wobei ein Teil der flüssigen Phase nach der Inkubationszeit abgetrennt werden kann,
   ▪ wobei zumindest ein teilweises Absondern von Schwermetallen aus der abgetrennten flüssigen Phase sowie eine Ausschleusung dieser Schwermetalle aus dem Prozess erfolgen kann und
   ▪ wobei die abgetrennte flüssige Phase zumindest anteilig in den Prozessschritt a) zur Herstellung einer Rohstoffdispersion zurückgeführt oder in den Prozessschritt c) zur Kompostierung zugeführt werden kann;
c) Erzeugung mindestens eines Bodensubstrates durch Kompostierung von mindestens einer Organik-haltigen Substanz
d) Erzeugung eines nährstoffreichen Bodensubstrats durch Zusammenführen des erzeugten Nährstoffsubstrates aus b) und des erzeugten oder in Erzeugung befindlichen Bodensubstrates aus c), wobei das Zusammenführen während der Erzeugung des Bodensubstrates oder im Anschluss erfolgen kann;
e) Wiederholen der Prozessschritte a) bis d).

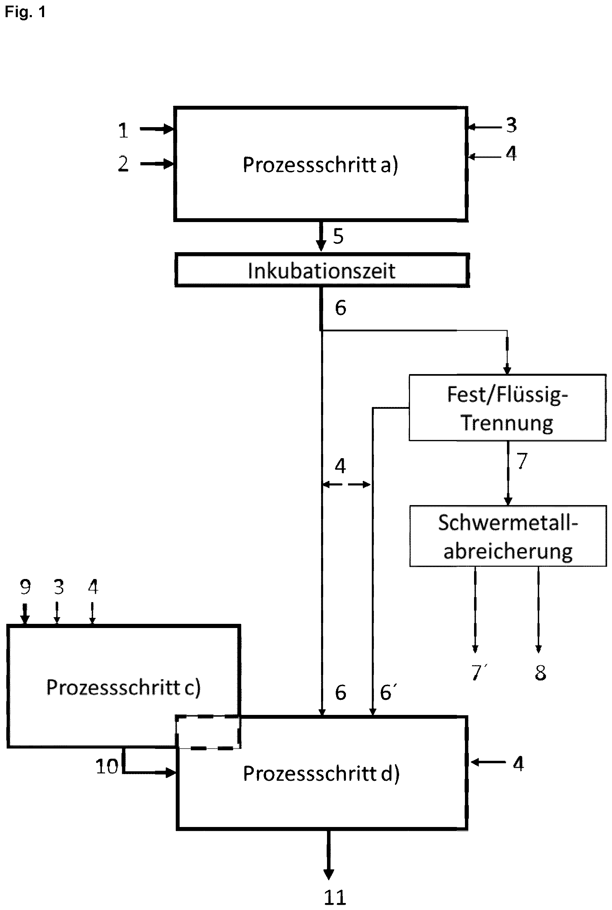

Die Aufgabe wird insbesondere dadurch gelöst, dass aus mindestens einer phosphathaltigen Asche und mindestens einem Reaktionsmittel und/oder Wasser und/oder weiteren Komponenten ein Nährstoffsubstrat erzeugt wird, wobei die Neutral-Ammoniumcitratlöslichkeit des mit der Asche zugeführten Phosphats durch Reaktion mit mindestens einem Reaktionsmittel erhöht wird und wobei das Nährstoffsubstrat als Nährstofflieferant für das erzeugte nährstoffreiche Bodensubstrat dient. Durch das erfindungsgemäß vorgesehene Zufügen eines Nährstoffsubstrates zu einem Bodensubstrat wird das Bodensubstrat auf eine kostengünstige Art auf eine besonders gute Nährstoffversorgung neben der Bodenverbesserung ausgerichtet. Eine bevorzugte Ausgestaltung des erfindungsgemäßen Verfahrens ist insbesondere in Fig. 1 zur Visualisierung dargestellt.

In den nachstehenden Absätzen sollen folgende Begriffe erläutert werden:

Die Bezeichnung nährstoffreiches Bodensubstrat charakterisiert dabei die Eigenschaft des Bodensubstrates, welches einen höheren Nährstoffanteil durch das Zuführen eines Nährstoffsubstrates als bei der alleinigen Bildung eines Bodensubstrates durch Kompostierung in Prozessschritt c) aufweist.

Unter Zusammenführen ist dabei das Ausbilden eines Gemisches aus mindestens einem Nährstoffsubstrat aus Prozessschritt b) und mindestens einem Bodensubstrat aus oder in Prozessschritt c) in einem vorgegebenen Verhältnis zu verstehen. Das Zusammenführen kann dabei während der Erzeugung des Bodensubstrates im oder im Anschluss daran erfolgen.

Das Bodensubstrat selbst aus Prozessschritt c) bezeichnet ein durch Kompostierung einer oder mehrerer Organik-haltigen Substanzen gebildetes Gemisch. Die Eigenschaften des gebildeten Bodensubstrats werden dabei im Wesentlichen durch die Art der eingesetzten Organik-haltigen Substanzen, die Prozessführung bei der Kompostierung und dem Rottegrad definiert.

Der Rottegrad ist dabei die Maßeinheit, in der die Stabilität von Kompost gegenüber dem Abbau durch Mikroorganismen angegeben wird.

Eine Kompostierung bezeichnet den Prozess, bei dem eine oder mehrere Organik-haltige Substanzen unter Einfluss von Sauerstoff (aerob) und von Mikroorganismen (heterotroph) abgebaut werden, wobei Kohlenstoffdioxid gasförmig entweicht und das Bodensubstrat gebildet wird.

Organik-haltige Substanzen im Sinne der Erfindung sind Stoffe mit einem TOC-Anteil (TOC = *total organic carbon*) von größer 10 % bezogen auf den getrockneten Zustand (Trockensubstanz TS). Beispiele für Organik-haltige Substanzen sind Tierausscheidungen, Tiermehl, Tierreste und Tierkörper, Grünschnitt- und Grünabfälle, Gülle, Gärresten, Torf, Humus und/oder Pyrolysesubstrate aus Biomasse oder Biokohle aus der Hydrothermale Carbonisierung (HTC) als Einzelstoff oder als Gemische.

Der Begriff Gärrest beschreibt im Sinne der Erfindung den flüssigen und/oder festen Rückstand, der bei der Vergärung von Biomasse zurückbleibt.

Der Begriff Gülle beschreibt im Sinne der Erfindung bevorzugt ein Gemisch aus Kot und Harn von landwirtschaftlichen Nutztieren in Kombination mit Einstreu mit wechselndem Wassergehalt.

Der gesamte organische Kohlenstoff oder TOC-Anteil (auch TOC-Wert, TOC = *total organic carbon)* ist ein Summenparameter und gibt die Summe des gesamten organischen Kohlenstoffs an. Er ist das Maß für den Gehalt an organischem Kohlenstoff.

Trockensubstanz (TS) oder auch Trockenmasse bezeichnet den Bestandteil in einem Stoffgemisch, der nach Abzug des im Stoffgemisch enthaltenen physikalisch gebundenen Wassers (Feuchte) übrigbleibt.

Als phosphathaltige Asche werden im Sinne der Erfindung solche Stoffe bezeichnet, die durch die Verbrennung, Vergasung oder Pyrolyse von Organik-haltigen Substanzen entstehen und einen Phosphoranteil größer als 4 % P2O5 und einen TOC-Anteil von kleiner als 3 % aufweisen. Beispiele für phosphathaltige Aschen sind Aschen und/oder Schlacken aus der Mono- oder Mitverbrennung von Klärschlamm, Aschen und/oder Schlacken aus der Verbrennung bzw. Mitverbrennung von Tierausscheidungen, Tiermehl, Tierreste und Tierkörper oder Aschen/Schlacken aus der Verbrennung von Gülle und Gärresten als Einzelstoff bzw. Gemische daraus. Die in der phosphathaltigen Asche enthaltenen Phosphorverbindungen werden hier als Phosphat bezeichnet, auch wenn dies in ihrer Gesamtheit in Einzelfällen nicht oder nicht vollständig der Bindungsart des Phosphors entsprechen sollte.

Unter einem Reaktionsmittel ist im Kontext der vorliegenden Erfindung ein Stoff oder ein Gemisch zu verstehen, der/das zum einen zumindest einen Teil des durch die phosphathaltige Asche zugeführten Phosphates löst und/oder mit diesen reagiert und zum anderen zumindest einen Teil der Schwermetalle aus der phosphathaltigen Asche löst. Reaktionsmittel sind beispielsweise organische oder anorganische Säuren oder Säuregemische oder Laugen oder Gemische aus unterschiedlichen Laugen, jeweils in unverdünnter oder verdünnter Form.

Als flüssige Phase wird im Kontext der vorliegenden Erfindung die Summe der flüssigen Stoffe in einem zusammenhängenden System definiert. So besteht die Rohstoffdispersion aus einer festen und einer flüssigen Phase. Die flüssige Phase in einem System, zum Beispiel in einer Rohstoffdispersion, kann dabei aus unterschiedlichen flüssigen Komponenten gebildet werden. So können flüssige Komponenten beispielsweise zumindest anteilig in Form von Feuchte, anteilig in einer Suspension oder als Flüssigkeit über verschiedene Stoffe bzw. zum Beispiel als Wasser zugeführt werden oder zumindest anteilig im Reaktionsmittel, beispielsweise flüssige, insbesondere auch verdünnte Säuren, enthalten sein.

Der Begriff Feuchte entspricht im Sinne der Erfindung dem physikalisch gebundenen Wasser, welcher am Stoff oder Stoffgemisch anhaftet. Der Begriff "Feuchte" wird auch synonym verwendet mit dem Begriff "Feuchtegehalt".

Die feste Phase ist im Kontext der vorliegenden Erfindung die Summe der ungelösten Stoffe

Im Sinne der Erfindung bezeichnet die Rohstoffdispersion ein Gemisch aus mindestens einer flüssigen und einer festen Phase, wobei die Rohstoffdispersion als phosphathaltiger Rohstoff mindestens eine phosphathaltige Asche enthält und mindestens ein Reaktionsmittel.

Das Nährstoffsubstrat bezeichnet ein Gemisch nach der erfindungsgemäßen Inkubationszeit, welches aus der Rohstoffdispersion gebildet wird und wobei die mindestens eine in der Rohstoffdispersion enthaltene phosphathaltige Asche mit dem mindestens einem ebenfalls in der Rohstoffdispersion enthaltenen Reaktionsmittel während der Inkubationszeit reagiert.

Im Kontext der Erfindung bezeichnet die Inkubationszeit die Zeit des Einwirkenlassens des mindestens einen Reaktionsmittels auf die mindestens eine phosphathaltige Asche, damit das Reaktionsmittel mit der phosphathaltigen Asche reagiert. Das Reaktionsmittel soll dabei zumindest einen Teil des in der phosphathaltigen Asche enthaltenen Phosphates lösen und/oder mit diesem so reagieren bzw. das Phosphat durch Reaktion umwandeln, dass ein besser neutral-ammoniumcitratlösliches Phosphat entsteht. Das vorzugsweise durch das Reaktionsmittel gelöste Phosphat bildet im anschließenden Prozess, zum Beispiel durch Fällung, Umkristallisation oder bei der Trocknung, vorteilhafterweise ein besser neutral-ammoniumcitratlösliches Phosphat als in der phosphathaltigen Asche.

Der Begriff besser neutral-ammoniumcitratlöslich bedeutet im Sinne der Erfindung bevorzugt, dass die Neutral-Ammoniumcitratlöslichkeit des Phosphates der phosphathaltigen Asche nach der Reaktion mit dem Reaktionsmittel höher ist.

Ein teilweises Absondern von Schwermetallen beinhaltet das Absondern bzw. Abtrennen mindestens eines Teils der in der flüssigen Phase enthaltenen Schwermetalle aus dieser flüssigen Phase. Die in der flüssigen Phase überwiegend gelöst vorliegenden Schwermetalle können dabei entweder in gelöster Form (z.B. durch Feinfiltration wie Membranfiltration und/oder durch Adsorption und/oder Absorption) aus der flüssigen Phase abgetrennt werden. Oder die gelöst vorliegenden Schwermetalle werden zuvor in eine feste Phase (z.B. durch Fällung, Auskristallisation) überführt und anschließend aus der flüssigen Phase (z.B. durch Filtration oder Zentrifugation) abgetrennt.

Der Begriff teilweise beschreibt dabei, dass nicht der gesamte Anteil an Schwermetallen abgetrennt werden muss, sondern der abzutrennende Anteil einstellbar nach dem benötigtem Umfang ist, wobei jedoch eine technisch relevante Menge in diesem Schritt mindestens abzutrennen ist. Als technisch relevant wird hier ein Anteil von größer 10 % der in der flüssigen Phase enthaltenen Schwermetalle definiert. Ein teilweises Absondern umfasst entsprechend den Bereich von 10-100% Absondern bzw. Abtrennung der in der flüssigen Phase vorliegenden Schwermetalle.

Eine Ausschleusung von Schwermetallen umfasst den Prozess, die teilweise abgesonderten bzw. abgetrennten Schwermetalle aus dem Prozess der Herstellung des nährstoffreichen Bodensubstrates zu separieren. Das heißt, die aus der flüssigen Phase abgesonderten bzw. abgetrennten Schwermetalle werden so separiert, dass sie nicht in das nährstoffreiche Bodensubstrat gelangen.

Alle Prozentangaben (%) im Kontext der Erfindung beziehen sich auf Gewichtsprozent (Gew.-% d. h. % w/w), wenn nicht anders angegeben. Es ist im Sinne der Erfindung bevorzugt, dass die hinsichtlich des Granulats oder des Verfahrens beschriebenen Definitionen, technischen Wirkungen oder Vorteile für alle der Aspekte der Erfindung gelten und jeweils auch für alle Aspekte der Erfindung offenbart sein sollen, so dass wechselseitig darauf Bezug genommen werden kann.

In einer ganz besonders bevorzugten Ausführungsform betrifft die Erfindung ein nährstoffreiches Bodensubstrat, das mit einem Verfahren umfassend die folgenden Schritte herstellbar ist:
a) Erzeugung einer Rohstoffdispersion durch das Vermischen mindestens einer phosphathaltigen Asche und mindestens eines Reaktionsmittels;
b) Bildung eines Nährstoffsubstrates durch Einhalten einer Inkubationszeit zwischen phosphathaltiger Asche und Reaktionsmittel von mindestens 10 Minuten
   ▪ wobei ein Teil der flüssigen Phase nach der Inkubationszeit abgetrennt werden kann,
   ▪ wobei zumindest ein teilweises Absondern von Schwermetallen aus der abgetrennten flüssigen Phase sowie eine Ausschleusung dieser Schwermetalle aus dem Prozess erfolgen kann und
   ▪ wobei die abgetrennte flüssigen Phase zumindest anteilig in den Prozessschritt a) zur Herstellung einer Rohstoffdispersion zurückgeführt oder in den Prozessschritt c) zur Kompostierung zugeführt werden kann;
c) Erzeugung mindestens eines Bodensubstrates durch Kompostierung von mindestens einer Organik-haltige Substanz
d) Erzeugung eines nährstoffreichen Bodensubstrats durch Zusammenführen des erzeugten Nährstoffsubstrates aus b) und des erzeugten oder in Erzeugung befindlichen Bodensubstrates aus c), wobei das Zusammenführen während der Erzeugung des Bodensubstrates oder im Anschluss erfolgen kann
e) Wiederholen der Prozessschritte a) bis d),
   wobei die Neutral-Ammoniumcitratlöslichkeit des mit der phosphathaltigen Asche zugeführten Phosphats durch Reaktion mit dem mindestens einem Reaktionsmittel erhöht wird und der P2O5-Anteil aus der phosphathaltigen Asche im nährstoffreichen Bodensubstrat größer 60 % neutral-ammoniumcitratlöslich ist.

Nährstoffreiche Bodensubstrate, die zur Verbesserung einzelner Bodenschichten eingesetzt werden, sind mithilfe von chemischen Formeln oder biophysikalischen Daten nur schwer zu charakterisieren. Deshalb werden die pedosphärenverbessernden Granulate im Sinne der Erfindung bevorzugt durch ein Verfahren zu ihrer Herstellung charakterisiert. Dies ist deshalb zulässig, da die nährstoffreichen Bodensubstrate nur schwer anders als anhand des Herstellungsverfahrens zu definieren sind. Die vorgeschlagenen nährstoffreichen Bodensubstrate umfassen vorzugsweise mehrere Nährstoffquellen. Eine dieser Nährstoffquellen stellt erfindungsgemäß phosphorhaltige Asche dar, wie es beispielsweise in Klärschlammaschen vorkommt. Dieses Sekundärphosphat wird durch Einwirken eines Reaktionsmittels verfügbar gemacht. Die im anorganischen Sekundärphosphat enthaltenen Schwermetalle können zumindest teilweise abgetrennt werden, wobei außer den abgetrennten und ausgeschleusten Schwermetallen keine weiteren Reststoffe anfallen. Durch das vorgeschlagene Verfahren und die vorgeschlagene Vorrichtung können verschiedenste anorganische, phosphorhaltige Aschen effizient und kostengünstig aufbereitet und als Nährstoffquelle für Bodensubstrate eingesetzt werden, wobei die typische Schwankungsbreite der Sekundärrohstoffe durch flexibel einsetzbare weitere Nährstoffkomponenten ausgeglichen werden kann. Dadurch wird es ermöglicht, dass gezielt boden- und/oder pflanzenspezifische nährstoffreiche Bodensubstrate bereitgestellt werden können, wobei im nährstoffreichen Bodensubstrat ein Großteil des Phosphates in einer gut pflanzenverfügbaren Form vorliegt und zumindest ein Teil der Schwermetalle abgetrennt werden kann.

Bei der Erfindung wird ein Nährstoffsubstrat und kein Düngegranulat bzw. -pellet zur Anreicherung der Bodensubstrate verwendet, was besonders energiesparsam und damit kostengünstig ist. Die im Stand der Technik beschriebenen Verfahren, bei denen phosphathaltige Aschen aus der Verbrennung von organischen Substanzen (z.B. Klärschlämmen) in gebrauchsfertige Düngegranulate bzw. -pellets überführt werden, müssen typischerweise für eine Lagerfähigkeit und geeignetes Handling energieintensiv thermisch getrocknet werden. Typisch sind dabei Restfeuchten von ca. 2 % und darunter. Bei der Erfindung wird hingegen aus mindestens einer phosphathaltigen Asche und einem Reaktionsmittel ein Nährstoffsubstrat hergestellt, bei dem eine derart niedrige Restfeuchte nicht eingestellt wird. Vielmehr enthält das Nährstoffsubstrat deutlich mehr Anteil an flüssiger Phase, bevor es mit einem Bodensubstrat zusammengeführt wird, wodurch das erfindungsgemäße nährstoffreiche Bodensubstrat gebildet wird. Dadurch ist eine energieintensive thermische Trocknung im erfindungsgemäßen Verfahren nicht erforderlich, was erheblich Energie und Kosten spart.

Ein weiterer Vorteil der Erfindung besteht darin, dass als Nährstoffquelle phosphorhaltige Aschen, wie beispielsweise Klärschlammaschen, eingesetzt und so einer sinnvollen Verwendung zugeführt werden können, wobei das darin enthaltene Phosphat besonders pflanzenverfügbar gemacht wird. Darüber hinaus ermöglicht es die Erfindung, die in der phosphathaltigen Asche enthaltenen Schwermetalle zumindest teilweise abzutrennen. Tests haben gezeigt, dass überraschenderweise neben den abgetrennten und ausgeschleusten Schwermetallen keine weiteren Reststoffe aus dem Verfahren resultieren.

In einem weiteren Aspekt betrifft die Erfindung eine Vorrichtung zur Herstellung von Granulaten, die mindestens die folgenden Komponenten umfasst:
▪ einen ersten Mischbehälter zur Zuführung und/oder Mischung zumindest der phosphorhaltigen Asche und des Reaktionsmittels, wodurch eine Rohstoffdispersion erhalten wird, wobei für die Inkubationszeit entweder der erste Mischbehälter genutzt und das Nährstoffsubstrat gebildet wird und/oder weitere Behälter vorhanden sind, in die die Rohstoffdispersion für die Inkubationszeit überführt und gemischt wird,
▪ optional eine Abtrenneinheit zur Abtrennung zumindest eines Teils der flüssigen Phase vom gebildeten Nährstoffsubstrat, wobei die Abtrenneinheit in dem ersten Mischbehälter integriert oder davon separat sein kann und eine Rückführeinheit für die abgetrennte flüssige Phase zur Herstellung einer Rohstoffdispersion analog zu Prozessschritt a) und/oder zur Erzeugung eines Bodensubstrates gemäß Prozessschritt c), wobei zusätzlich eine Reinigungseinheit zur zumindest teilweisen Abtrennung von Schwermetallen aus der abgetrennten flüssigen Phase vorhanden sein kann,
▪ eine Mischeinheit zum Zusammenführen des erzeugten Bodensubstrates und des erzeugten Nährstoffsubstrates zur Bildung des nährstoffreichen Bodensubstrates.

Es ist im Sinne der Erfindung bevorzugt, dass die Vorrichtung zur Herstellung von Granulaten jeweils mindestens eine der genannten Komponenten umfasst. Es kann jedoch für unterschiedliche Anwendungen auch bevorzugt sein, dass die Vorrichtung von den unterschiedlichen Komponenten mehr als ein Stück umfasst, beispielsweise zwei Mischbehälter, drei Mischeinheiten oder zwei Rückführeinheiten, ohne darauf beschränkt zu sein.

In einem weiteren Aspekt betrifft die Erfindung eine Verwendung des vorgeschlagenen nährstoffreichen Bodensubstrates zur Nährstoffzufuhr und/oder Bodenverbesserung in der Land-, Forstwirtschaft und/oder im Gartenbau, wobei das nährstoffreiche Bodensubstrat mindestens eine phosphorhaltige Asche umfasst, sowie einen größer 60 % neutral-ammoniumcitratlöslichen P2O5-Anteil. Es war völlig überraschend, dass die vorgeschlagenen pedosphärenverbessernden, nährstoffreiche Bodensubstrate sowohl die Phosphorversorgung von Pflanzen sicherstellen als auch die Entwicklung von Kleinstlebewesen wie auch von Bakterien und Protozoen so optimieren, dass die Pflanzen erheblich besser wachsen. Es lag für den Fachmann keinesfalls nahe, dass pedosphärenverbessernde, nährstoffreiche Bodensubstrate, die durch die genannten Schritte der Herstellung charakterisiert werden, geeignet sind, sowohl die tierische Lebendmasse, also die tierischen Bodenlebewesen wie z.B. Mikroorganismen, Würmer usw., der Böden zu optimieren, als auch das Pflanzenwachstum zu verbessern. Dies betrifft vor allem Mais, Weizen, Zwiebeln, Kartoffeln, Hirse, Bohnen, Äpfel, Zuckerrüben, Gurken und Gewürzgurken, Weintrauben, Tomaten, Gerste und Kohlpflanzen.

Die Gesamtmenge an Phosphor (P) sowie die Schwermetalle wie beispielsweise Blei, Cadmium, Nickel werden mittels induktiv-gekoppelter Plasma-Atom-Emissionsspektrometrie (ICP-OES) gemäß DIN EN ISO 11885:2009 bestimmt. Dazu wird die zu bestimmende Probe zunächst mit einem Königswasseraufschluss gemäß DIN EN 13346:2001-04 aufgeschlossen. Zur Bestimmung des löslichen Phosphatanteils sind unterschiedliche Verfahren, insbesondere unterschiedliche Extraktionsverfahren bekannt. Zur Abschätzung der P-Verfügbarkeit werden dazu die Düngemittel im Labor mit unterschiedlichen Lösungsmitteln untersucht und entsprechend gekennzeichnet. Die wichtigsten eingesetzten Lösungsmittel sind Wasser, Ammoniumcitrat, Zitronensäure, Ameisensäure und Mineralsäuren. Auch in der EU-Verordnung über Düngemittel sind verschiedene Verfahren zur Bestimmung der Phosphatlöslichkeit von Düngemitteln normiert. Je nach Herkunft und Beschaffenheit des zu prüfenden P-Düngers kann ein unterschiedliches Verfahren zum Einsatz kommen. Zur Charakterisierung der Löslichkeit des Phosphates werden im Kontext der vorliegenden Erfindung die drei folgenden Extraktionsverfahren angewendet: Die Extraktion des in Wasser löslichen Phosphors (P) erfolgt gemäß DIN EN15958:2011. Die Extraktion des in neutralem Ammoniumcitrat löslichen Phosphors (P) erfolgt gemäß DIN EN15957:2011. Die Extraktion des 2%iger Citronensäure löslichen Phosphors (P) erfolgt gemäß DIN EN15920:2011. Der Phosphatgehalt (P) wird anschließend mittels induktiv-gekoppelter Plasma-Atom-Emissionsspektrometrie (ICP-OES) gemäß DIN EN ISO 11885:2009 bestimmt.

Insbesondere bei hohen Anteilen von wasser- und neutral-ammoniumcitratlöslichem Phosphat ist gewährleistet, dass ein großer Teil des Düngerphosphats tatsächlich kurz- und mittelfristig der Pflanze zur Verfügung steht. Der neutral-ammoniumcitratlösliche Phosphoranteil kann dabei als Anhaltspunkt für die mittelfristige Pflanzenverfügbarkeit des Düngephosphors herangezogen werden, d. h. über den Zeitraum von etwa einer Fruchtfolge. Eine Fruchtfolge bezeichnet bevorzugt den zeitlichen Ablauf der auf einer landwirtschaftlichen Fläche angebotenen Nutzpflanzenarten im Ablauf der Vegetationsperiode und/oder Jahre. Der unmittelbar verfügbare P-Anteil eines Düngemittels wird durch seine Löslichkeit in Wasser beschrieben. Je höher der wasserlösliche P-Anteil, desto schneller bzw. leichter die Verfügbarkeit des Dünge-Phosphors für die Pflanze. Mit stärkeren Lösungsmitteln, wie Zitronen- oder Ameisensäure, werden auch P-Anteile gelöst, die allenfalls langfristig oder nur unter bestimmten Standortbedingungen, wie niedrigen pH-Werten, pflanzenverfügbar sind. Pflanzen- und Vegetationsversuche haben gezeigt, dass vor allem eine gute Korrelation zwischen neutral-ammoniumcitratlöslichem Phosphatanteil und dem Wachstum der Pflanzen besteht. Hohe Wasserlöslichkeit stellt Phosphat sehr schnell in großen Mengen zur Verfügung, was die Pflanze unter Umständen im Wachstum gar nicht in gleicher zeitlicher Abfolge vollständig aufnehmen kann, dann also ungenutzt bleibt und gegebenenfalls ausgewaschen wird. Nach heute übereinstimmender wissenschaftlicher Meinung sollte aus Gründen des Ressourcenschutzes die Verwendung von P-Düngemitteln bevorzugt werden, die einen besonders hohen neutral-ammoniumcitratlöslichen Phosphatanteil aufweisen. Insofern erfüllt die vorliegende Erfindung die Forderung nach hohen neutral-ammoniumcitratlöslichen Phosphatanteilen, indem mit dem vorgeschlagenen Verfahren die Pflanzenverfügbarkeit des Phosphates aus der phosphathaltigen Asche wesentlich erhöht wird und so ein Nährstoffsubstrat mit einem besonders hohen neutral-ammoniumcitratlöslichen P2O5-Anteil von größer 60 %, bevorzugt größer 70 %, besonders bevorzugt größer 80 %, bezogen auf den P2O5-Anteil der phosphathaltigen Asche bereitgestellt werden.

Düngemittel sind im Sinne der Erfindung Stoffe oder Stoffgemische, die das Nährstoffangebot für die angebauten Pflanzen, insbesondere Kulturpflanzen, in der Land- und Forstwirtschaft sowie im Gartenbau ergänzen beziehungsweise einstellen. Sie können gegebenenfalls mit weiteren Materialien kombiniert und/oder funktionalisiert werden. Als Düngemittel werden hier sowohl Einzelnährstoffdünger, wie Phosphatdünger, als auch Mehrnährstoffdünger verstanden.

Die Feuchte beziehungsweise der Feuchtegehalt wird im Kontext der vorliegenden Erfindung gravimetrischen nach DIN 52183 bestimmt. Bei der auch als Darr-Methode bekannten gravimetrischen Feuchtigkeitsbestimmung wird die Probe zuerst gewogen und anschließend bei 105°C in einem Trockenofen bis zur Gewichtskonstanz getrocknet. Dabei entweicht das in der Probe enthaltene freie Wasser. Die Gewichtsdifferenz wird festgestellt, welche im Kontext der vorliegenden Erfindung der Feuchte bzw. dem Feuchtegehalt entspricht. Da die flüssige Phase auch gelöst vorliegende Komponenten beinhalten kann, die bei der Trocknung als Feststoff verbleiben, ist in der Regel der prozentuale Anteil der flüssigen Phase zum Teil deutlich höher als die Feuchte.

Der Begriff "erdfeucht" wird im Sinne der Erfindung vorzugsweise mit Hilfe einer Konsistenz definiert. In der Betontechnologie wird allgemein ein Beton steifer Konsistenz mit einem Wasserzementwert ≤ 0,40 als erdfeuchter Beton bezeichnet. In Analogie zu dieser Definition ist unter einer erdfeuchten Rohstoffmischung im Sinne der Erfindung ein Konsistenzbereich der Rohstoffmischung vergleichbar mit einer Konsistenz wie erdfeuchter Beton zu verstehen. Auf der einen Seite ist der erfindungsgemäße Konsistenzbereich durch eine verhältnismäßig trockene Mischung jedoch mit mehr als 5 % Feuchte, bezogen auf die Rohstoffmischung, begrenzt, die sich gerade nicht in der Hand formen lässt, also noch nicht wie Pulver zerfällt. Auf der anderen Seite ist der Bereich dadurch begrenzt, dass sich die Rohstoffmischung in der Hand formen lässt, vergleichbar mit einem Schneeball, und nicht ohne Krafteinwirkung, beispielsweise durch Vibration, zerfließt.

Unter einem plastisch leicht formbaren Gemisch ist im Sinne der Erfindung vorzugsweise ein Gemisch mit einer knetmassenähnlichen Konsistenz zu verstehen, wobei das plastisch leicht formbare Gemisch bereits selbst eine Formstabilität durch wirksame Bindekräfte aufweist, wobei diese Formstabilität durch leichte mechanische Kräfte (wie Scher-, Druck- oder Zugkräfte) verformbar ist und nach der Krafteinwirkung erneut eine Formstabilität aufweist. Ein plastisch leicht formbares Gemisch weist bevorzugt einen etwas höheren Feuchteanteil als erdfeuchte Mischungen auf.

Eine erdfeuchte Mischung und ein plastisch leicht formbares Gemisch grenzen sich im Sinne der Erfindung klar von einer Suspension ab. Bei einer Suspension handelt es sich definitionsgemäß um ein heterogenes Stoffgemisch aus einer Flüssigkeit und darin fein verteilten Festkörpern (Partikeln), wobei sich die Partikel in der Flüssigkeit zumindest teilweise und zumindest zeitweise in der Schwebe halten, auch wenn ein Absetzverhalten einsetzen kann. Die Feststoffe sind in der flüssigen Phase "suspendiert". Die in der erdfeuchten und/oder plastisch leicht formbaren Mischung als Feuchte bezeichnete Flüssigkeit im Kontext der vorliegenden Erfindung ist hingegen physikalisch an den Feststoff gebunden beziehungsweise anhaftend oder liegt weitegehend als sogenanntes Porenwasser vor. Erdfeuchte und/oder plastisch leicht formbare Mischungen haben einen wesentlich geringeren Anteil an flüssiger Phase als Suspensionen.

Im Prozessschritt a) des vorgeschlagenen Verfahrens wird eine Rohstoffdispersion aus mindestens einer phosphathaltigen Asche und mindestens einem Reaktionsmittel erzeugt. Das Zusammenführen der Komponenten der Rohstoffdispersion kann in beliebiger Reihenfolge erfolgen. Die Konsistenz dieser Rohstoffmischung kann durch eine oder mehrere flüssige Komponenten, so beispielsweise Wasser, eingestellt werden. Dabei kann das Reaktionsmittel zumindest anteilig ebenfalls in flüssiger Form zugegeben werden. Alternativ oder zusätzlich können auch Wasser und/oder flüssige nährstoffhaltige Lösungen zugegeben werden. Nährstoffhaltige Lösungen enthalten vorzugsweise Nähr- und/oder Spurenstoffe, die im vorgeschlagenen nährstoffhaltigen Bodensubstrat enthalten sind. Die einzustellende Konsistenz der Rohstoffmischung richtet sich dabei nach der Ausführungsform der nachfolgenden Prozessschritte, der Konstitution des erzeugten Bodensubstrates (Prozessschritt c)) und/oder der phosphathaltigen Asche und/oder den gewünschten Eigenschaften des zu erzeugenden nährstoffreichen Bodensubstrates.

In einer bevorzugten Ausführungsform wird ein erdfeuchtes bis plastisch leicht formbares Gemisch mit einer Feuchte von kleiner als 50 %, bevorzugt kleiner als 40 % und besonders bevorzugt kleiner als 30 %, als Rohstoffdispersion erzeugt. Zur Bildung des erdfeuchten bis plastisch leicht formbaren Gemischs werden mindestens eine phosphathaltige Asche und mindestens ein Reaktionsmittel zusammengeführt und ausreichend homogenisiert. Vorteil dieser Ausführungsform ist, dass die Rohstoffdispersion und das resultierende Nährstoffsubstrat eine Konsistenz ähnlich eines Humusbodens hat und somit den erzeugten Bodensubstraten aus oder im Prozessschritt c) ohne weitere Konditionierung zugeführt werden kann (Prozessschritt d). Diese bevorzugte Ausführungsform ist damit eine besonders wirtschaftliche Ausführungsvariante.

In einer anderen, ebenfalls bevorzugten, Ausführungsform ist der Anteil an flüssiger Phase in der Rohstoffdispersion größer als 30 %, besonders bevorzugt größer 50 % und die Rohstoffdispersion ist als Suspension ausgebildet. Diese Ausführungsform der Rohstoffdispersion kann technische Vorteile gegenüber erdfeucht vermischt Rohstoffdispersionen haben. So können beim Mischen der phosphathaltigen Asche mit der Mineralsäure spontan ablaufende und zum Teil sehr exothermen Reaktionen ablaufen, die dadurch kontrollier- und steuerbar werden. Der höhere Anteil an flüssiger Phase wirkt vorteilhafterweise als Reaktionspuffer. Auch ist eine Rohstoffdispersion mit deutlich höherem Anteil an flüssiger Phase wesentlich weniger klebrig. Eine stabile Prozessführung kann damit erleichtert und Anhaftung und Verstopfung von Anlagenteilen können dadurch effektiv reduziert werden. Auch können durch die Herstellung der Rohstoffdispersion in dieser Ausführungsform vorteilhafterweise die Korrosionsprobleme gelöst werden. Die Reaktion zwischen phosphathaltiger Asche und Reaktionsmittel kann vorzugsweise in einem säurefesten Rührbehälter mit säurefestem Rührwerk erfolgen, wobei nach dieser Reaktion der größte Teil der freien Säure oder Lauge aufgebraucht und damit weniger schädlich für die nachfolgenden Anlagenteile ist.

Das in der mindestens einen phosphathaltigen Asche enthaltene Phosphat dient im erzeugten nährstoffreichen Bodensubstrat vorteilhafterweise als Nährstoffkomponente. Hohe Phosphatgehalte, insbesondere bei der phosphathaltigen Asche sind hier entsprechend erwünscht. Bevorzugt werden deshalb phosphathaltige Aschen mit größer 10 % P2O5, besonders bevorzugt mit größer 15 % P2O5 und ganz besonders bevorzugt mit größer 20 % P2O5. Mit anderen Worten sind P2O5-Anteile von größer 10 %, besonders bevorzugt von größer 15 % und ganz besonders bevorzugt von größer 20 % bevorzugt. Daneben kann die phosphathaltige Asche weitere Komponenten enthalten. Vorteilhaft ist es, wenn weitere Nährstoffkomponenten enthalten sind, so beispielsweise N, K, Mg oder andere Spurennährstoffe.

Im Prozessschritt b) reagiert/reagieren das oder die phosphathaltigen Aschen mit mindestens einem Reaktionsmittel und es wird dadurch das erfindungsgemäße Nährstoffsubstrat gebildet. Zur Reaktion ist die erfindungsgemäße Inkubationszeit im Sinne des Einwirkenlassens des Reaktionsmittels auf die phosphathaltige Asche von mindestens 10 Minuten, bevorzugt mindestens 30 Minuten, einzuhalten. Die Reaktion ist die Voraussetzung für die erfindungsgemäße Erhöhung der Löslichkeit des in der phosphathaltigen Asche enthaltenen Phosphats. Soll auch eine zumindest teilweise Schwermetallabscheidung erfolgen, ist es im Sinne der Erfindung bevorzugt, dass das Reaktionsmittel dazu eingerichtet ist, auch einen - vorzugsweise möglichst hohen - Teil der enthaltenen Schwermetalle zu lösen. Das Reaktionsmittel wird insbesondere so ausgewählt, dass es die genannten Anforderungen vorzugsweise beim Aufgeben erfüllt.

Der in der phosphathaltigen Asche vorhandene Phosphatanteil weist typischerweise eine verhältnismäßig geringe Löslichkeit auf. Entsprechend sind solche Stoffe, wie beispielsweise Klärschlammaschen, nur bedingt als Düngemittel geeignet. Typischerweise zeigen diese anorganischen Sekundärphosphate eine Wasserlöslichkeit von kleiner als 30 % und eine Neutral-Ammoniumcitratlöslichkeit von kleiner als 50% auf, vorzugsweise jeweils bezogen auf den Gesamtphosphatgehalt in der phosphathaltigen Asche. Für einen sinnvollen Einsatz als Nährstofflieferant ist es im Sinne der Erfindung bevorzugt, dass dieses unzureichend lösliche Phosphat in ein besser lösliches und damit besser pflanzenverfügbares Phosphat umgewandelt wird. Die Umwandlung erfolgt erfindungsgemäß durch eine zumindest teilweise Reaktion der phosphathaltigen Asche mit mindestens einem Reaktionsmittel. Das Reaktionsmittel ist vorzugsweise dazu eingerichtet, zumindest einen Teil des in der phosphathaltigen Asche enthaltenen Phosphates zu lösen und/oder mit diesem so zu reagieren bzw. das Phosphat durch eine Reaktion umzuwandeln, dass ein besser neutral-ammoniumcitratlösliches Phosphat entsteht. Das vorzugsweise durch das Reaktionsmittel gelöste Phosphat bildet im anschließenden Prozess, zum Beispiel durch Fällung, Umkristallisation oder bei der Trocknung, vorteilhafterweise ein besser neutral-ammoniumcitratlösliches Phosphat als in der phosphathaltigen Asche. Der Begriff "besser neutral-ammoniumcitratlöslich" bedeutet im Sinne der Erfindung bevorzugt, dass die Neutral-Ammoniumcitratlöslichkeit des Phosphates der phosphathaltigen Asche nach der Reaktion mit dem Reaktionsmittel höher ist. Bevorzugt ist dabei eine Erhöhung der Neutral-Ammoniumcitratlöslichkeit um größer als 20 %, besonders bevorzugt ist eine Erhöhung um größer 50 %.

Ein entsprechendes Berechnungsbeispiel kann wie folgt aussehen:
Die Neutral-Ammoniumcitratlöslichkeit des Phosphatanteils aus der unbehandelten phosphathaltigen Asche von 50 % wird durch die Reaktion mit dem Reaktionsmittel um 20 % auf 60% erhöht. Durch beispielsweise die Art und Konzentration des Reaktionsmittels, die Reaktionsführung und Reaktionszeit kann Einfluss auf die resultierende Neutral-Ammoniumcitratlöslichkeit der phosphathaltigen Asche genommen werden. Bevorzugt weist der Phosphatanteil aus der phosphathaltigen Asche anschließend im erzeugten nährstoffhaltigen Bodensubstrat eine Neutral-Ammoniumcitratlöslichkeit von größer als 60 %, bevorzugt größer als 70 %, besonders bevorzugt größer als 80 %, auf. Durch die bevorzugte Reaktion bzw. Umwandlung des Phosphates und die bevorzugte resultierende Neutral-Ammoniumcitratlöslichkeit aus der phosphathaltigen Asche werden vorteilhafterweise eine bessere Phosphat-Pflanzenverfügbarkeit und damit eine verbesserte Nährstoffversorgung der Pflanzen erzielt. Die P-Löslichkeit wird vorzugsweise festgelegt durch die Art der P-Bindung und das Lösungsmilieu. Durch die Art der Reaktionsführung im Prozessschritt b) kann auf die Bindung des P, also auf die sich ausbildenden Phosphatphasen, Einfluss genommen werden. Dies kann beispielsweise durch die Art und Konzentration des Reaktionsmittels, die Reaktionszeit und/oder die Prozesstemperatur geschehen.

In einer bevorzugten Ausführungsform der Erfindung wird die Reaktionsführung vorzugsweise so gesteuert, dass der Phosphatanteil aus der phosphathaltigen Asche anschließend im nährstoffreichen Bodensubstrat eine Neutral-Ammoniumcitratlöslichkeit von größer als 60 % und eine Wasserlöslichkeit von kleiner als 40 % aufweist. Durch die Einstellung der Löslichkeiten in dieser Form wird bewirkt, dass das Phosphat über etwa eine Wachstumsperiode tatsächlich auf dem Feld für die Pflanzen ausreichend gut pflanzenverfügbar ist, jedoch in dieser Zeit nicht ausgewaschen wird. Eine Auswaschung kann typischerweise erfolgen, wenn eine sehr gute Wasserlöslichkeit, also deutlich höher als hier vorgesehen, vorhanden ist. In einer besonders bevorzugten Ausführungsform der Erfindung wird für den Phosphatanteil aus der phosphathaltigen Asche im nährstoffreichen Bodensubstrat eine Neutral-Ammoniumcitratlöslichkeit von größer als 80 % und eine Wasserlöslichkeit von kleiner als 30 % eingestellt. Überraschenderweise hat sich gezeigt, dass dadurch insbesondere Winterroggen eine besonders günstige P-Versorgung über eine Wachstumsperiode erfahren. In einer anderen besonders bevorzugten Ausführungsform der Erfindung wird für den Phosphatanteil aus der phosphathaltigen Asche im erzeugten nährstoffreichen Bodensubstrat eine Neutral-Ammoniumcitratlöslichkeit von größer als 90 % und eine Wasserlöslichkeit von kleiner als 15 % eingestellt. Dieses Verhältnis ist besonders günstig für Weizenpflanzen.

Durch die Art und Konzentration des Reaktionsmittels, die Reaktionsführung und Reaktionszeit kann auch Einfluss auf die Art und den Anteil der gelösten Schwermetalle genommen werden. So bewirkt beispielsweise eine höhere Säurestärke vorzugsweise einen höheren Anteil an gelösten Schwermetallen. Sollen Schwermetalle im Verfahren abgetrennt werden, ist ein höherer Anteil an gelösten Schwermetallen in diesem Prozessschritt bevorzugt, da so mehr Schwermetalle gelöst werden, desto mehr Schwermetalle können bei Bedarf abgetrennt werden. In einer bevorzugten Ausführungsform der Erfindung wird deshalb der Rohstoffdispersion so viel Säure zugegeben, dass sich ein pH-Wert während der Inkubationszeit von kleiner als 1 einstellt. Dadurch wird bereits ein signifikanter Anteil an Schwermetallen gelöst. In einer besonders bevorzugten Ausführungsform der Erfindung wird der Rohstoffdispersion so viel Säure zugegeben, dass sich ein pH-Wert während der Inkubationszeit von kleiner als 0,5 einstellt. Dabei werden insbesondere die Schwermetalle Arsen und Blei bereits fast vollständig gelöst. Wird der pH-Wert während der Inkubationszeit weiter auf kleiner 0,2, wie in einer ganz besonders bevorzugten Ausführungsform der Erfindung, abgesenkt, gehen auch andere Schwermetalle verstärkt in Lösung.

In einer bevorzugten Ausführungsform der Erfindung wird mindestens ein Reaktionsmittel verwendet, welches mindestens eines der Elemente Stickstoff (N), Schwefel (S), Kalium (K) und/oder Phosphor (P) umfasst, so beispielsweise phosphorige Säure (H3PO3), Phosphorsäure (H3PO4), Salpetersäure (HNO3), Schwefelsäure (H2SO4), schweflige Säure (H2SO3) und/oder Kalilauge (KOH). Durch die Verwendung derartiger Reaktionsmittel werden entsprechend zusätzlich Nährstoffkomponenten, wie Stickstoff, Schwefel, Kalium und/oder Phosphor, in das Nährstoffsubstrat bzw. das nährstoffreiche Bodensubstrat eingetragen. Durch eine geeignete Reaktionsabfolge kann vorzugsweise die Nährstoff-Bindungsform der im Reaktionsmittel enthaltenen Nährstoffe, z.B. Stickstoff und/oder Schwefel, in eine für das nährstoffreiche Bodensubstrat geeignete Form umgewandelt werden.

Durch die Reihenfolge des Zusammenführens der Komponenten, der zeitlichen Abfolge und der Inkubationszeit kann beispielsweise Einfluss auf die ablaufende Reaktion und somit auch auf den Anteil der gelösten Schwermetalle und die Neutral-Ammoniumcitratlöslichkeit des Phosphates im erzeugten Düngergranulat genommen werden. Überraschend wurde festgestellt, dass zur Erhöhung der Neutral-Ammoniumcitratlöslichkeit eine verhältnismäßig kurze Verweilzeit ausreichend ist. In einer bevorzugten Ausführungsform der Erfindung wird deshalb die Inkubationszeit zwischen 10 und 200 Minuten eingestellt, um insbesondere die Neutral-Ammoniumcitratlöslichkeit zu erhöhen. In einer besonders bevorzugten Ausführungsform der Erfindung wird die Inkubationszeit auf 10 bis 100 Minuten, bevorzugt im Bereich 10 bis 60 Minuten, eingestellt. Hier können ebenfalls hohe Neutral-Amonniumcitratlöslichkeiten erreicht werden, durch die geringere Inkubationszeit kann vorteilhafterweise die Dimensionierung der Reaktionsbehälter verkleinert werden, so dass entsprechend Prozesskosten gesenkt werden können.

Die Inkubationszeit zur Erzielung der gewünschten Löslichkeiten hängt auch beispielsweise von der Art des eingesetzten Reaktionsmittels ab. So führen starke Säuren, wie beispielsweise konzentrierte Mineralsäuren, oder starke Basen, wie beispielsweise konzentriertes NaOH, typischerweise zu einer beschleunigten Reaktion und eine kürzere Inkubationszeit ist erforderlich. Werden hingegen schwächere Säuren, wie beispielsweise organische Säuren, wie beispielsweise Zitronen- oder Oxalsäure, eingesetzt, ist eine längere Inkubationszeit erforderlich. In einer bevorzugten Ausführungsform der Erfindung wird die Inkubationszeit in einem Bereich zwischen 30 und 500 Minuten, bevorzugt 30 und 300 Minuten, eingestellt.

Zur Erhöhung der Wasserlöslichkeit sind überraschenderweise längere Reaktionszeiten erforderlich. Deshalb wird in einer anderen bevorzugten Ausführungsform der Erfindung die Inkubationszeit zwischen 60 bis 1000 Minuten eingestellt.

Eine höhere Prozesstemperatur erhöht vorzugsweise die Reaktionsgeschwindigkeit zwischen anorganischem Sekundärphosphat und dem Reaktionsmittel und verkürzt damit die notwendige Inkubationszeit. In einer bevorzugten Ausführungsform der Erfindung wird deshalb die Prozesstemperatur bei der Inkubation des anorganischen Sekundärphosphates und des Reaktionsmittels oberhalb von 30 °C, besonders bevorzugt oberhalb von 40 °C und ganz besonders bevorzugt oberhalb von 50 °C, eingestellt.

Die erfindungsgemäße Reaktion zur zumindest anteiligen Phosphatumwandlung aus der phosphathaltigen Asche in Prozessschritt b) ist dabei vorzugsweise im technischen Sinne so zu verstehen, dass im Protzessschritt b) der weitaus größte Anteil der Reaktion erfolgt und somit im Sinne der Erfindung im Prozessschritt b) das Nährstoffsubstrat gebildet wird. Es kann jedoch auch bevorzugt sein, dass die Reaktion auch im Prozessschritt d) und/oder im dabei gebildeten nährstoffhaltigen Bodensubstrat noch fortläuft, dann jedoch in deutlich verminderter Intensität. Auch kann es bevorzugt sein, dass das Nährstoffsubstrat vor dem Zusammenführen mit dem Bodensubstrat zwischengelagert wird und dabei die Reaktion noch weiter fortläuft, dann jedoch ebenfalls in deutlich verminderter Intensität.

Unter "weitaus größte Anteil" der Reaktion ist hierbei zu verstehen, dass mehr als 70 % der über das gesamte Verfahren erreichten Erhöhung der Neutral-Ammoniumcitratlöslichkeit des Phosphates aus der phosphathaltigen Asche im Prozessschritt b) innerhalb der erfindungsgemäßen Inkubationszeit erreicht werden. Das heißt, würde man die Reaktion nach dem Prozessschritt b) durch schnelle Trocknung abstoppen, zeigt das mit dem Reaktionsmittel behandelte Phosphat aus phosphathaltiger Asche dieses so abgestoppten Reaktionsprodukts bereits mindestens 70 % der Neutral-Ammoniumcitratlöslichkeit des Phosphates aus der phosphathaltigen Asche im erzeugten nährstoffhaltigen Bodensubstrat.

In einer bevorzugten Ausführungsform wird der Anteil an flüssiger Phase in der Rohstoffdispersion größer als 30 %, besonders bevorzugt größer 50 %, eingestellt und während oder nach der Inkubationszeit ein Teil der flüssigen Phase abgetrennt. Vorteil dieser Ausführungsform ist, dass die Reaktion zwischen mindestens einer phosphathaltigen Asche und mindestens einem Reaktionsmittel bei einem hohen Anteil an flüssiger Phase mit den oben ausgeführten Vorteile wie einer besseren Kontrolier- und Steuerbarkeit erfolgen kann. Durch die Abtrennung eines Teils der flüssigen Phase wird das resultierende Nährstoffsubstrat so konditioniert, dass eine definierte Konsistenz des nach dem Zusammenführen mit dem Bodensubstrat in Prozessschritt d) gebildeten nährstoffhaltigen Bodensubstrats (z.B. erdfeucht) resultiert. Die teilweise Abtrennung der flüssigen Phase im Sinne der vorliegenden Erfindung kann kontinuierlich und/oder diskontinuierlich in einem oder mehreren Schritten erfolgen, beispielsweise durch Filtrieren oder Zentrifugieren. Die Filtration kann diskontinuierlich, zum Beispiel mittels Autopress, Drucknutschen, Rührdrucknutschen, Saugnutschen, Tellerfilter, (Druck)Blattfilter, Beutelfilter, Kerzenfilter, Schlauchfilter, Schichtenfilter, Filterpressen, wie z.B. Rahmenfilterpressen, Kammerfilterpressen, Membranfilterpressen; Plattenfilter und/oder Schüttungsfilter oder kontinuierlich, zum Beispiel mittels Crossflow-Filtration, Scherspaltfilter, Tubular-Rotorfilter, Bandfilter, Druckdrehfilter, Trommelfilter, Vakuumdrehfilter, Scheibendruckfilter und/oder Schiebbandpresse erfolgen, ohne darauf beschränkt zu sein. Das Zentrifugieren kann kontinuierlich durch zum Beispiel Siebzentrifugen, Siebschneckenzentrifugen, Prallringzentrifugen, Gleitzentrifugen, Schubzentrifugen, Schwingzentrifugen, Taumelzentrifugen und/oder Vollmantelzentrifugen oder diskontinuierlich, zum Beispiel durch Hängependelzentrifugen, Horizontalschälzentrifugen, Stülpfilterzentrifugen, Schubbeutelzentrifugen und/oder Vertikalzentrifugen erfolgen. Es ist im Sinne der Erfindung bevorzugt, dass die Fest-Flüssigtrennung mittels Filterpressen oder Vakuumbandfilter durchgeführt wird. Bei der teilweisen Abtrennung der flüssigen Phase ist es vorzugsweise nicht zwingend erforderlich, dass alle festen Bestandteile aus der abgetrennten flüssigen Phase vollständig abgetrennt werden. Insbesondere sehr feine feste Partikel, die im Sinne der Erfindung vorzugsweise als Schwebpartikel oder Schwebepartikel bezeichnet werden, können vorzugsweise in der abgetrennten Phase verbleiben. Dies vereinfacht zum einen den Abtrennprozess, beispielsweise bei Filtration oder Zentrifugation, da insbesondere die vollständige Abtrennung von feinen Partikeln bei einer Fest-Flüssig-Trennung mit hoher Feststoffbeladung sehr aufwendig ist. Die abgetrennte flüssige Phase kann dabei zumindest anteilig Prozessschritt a) zur Herstellung einer Rohstoffdispersion zurückgeführt und/oder Prozessschritt c) zur Herstellung der Bodensubstrate zugeführt werden. Dadurch wird die flüssige Phase im erfindungsgemäßen Verfahren genutzt und es muss entsprechend keine oder weniger abgetrennte flüssige Phase entsorgt werden. Zudem werden dadurch die in der flüssigen Phase gelösten Bestandteile genutzt.

In einer besonders bevorzugten Ausführungsform werden zumindest ein Teil der in der abgetrennten flüssigen Phase befindlichen Schwermetalle abgetrennt. Vor der möglichen Schwermetallabtrennung kann entweder die Rohstoffdispersion, das Nährstoffsubstrat und/oder die abgetrennte flüssige Phase konditioniert werden. Eine solche Konditionierung kann dabei insbesondere diejenigen Maßnahmen umfassen, die die Schwermetallabtrennung ermöglichen, verbessern und/oder begünstigen, beispielsweise eine gezielte Einstellung des pH-Werts, das Ausfällen oder Abtrennen von störenden Begleit- und/oder Nährstoffelementen oder Einstellen einer definierten Konzentration, Viskosität und/oder Temperatur. Zur möglichen Abtrennung der Schwermetallionen aus der teilweisen abgetrennten flüssigen Phase stehen unterschiedliche Verfahren zur Verfügung, beispielsweise mittels eines Ionenaustauschers, Flüssig-flüssig-Abtrennung, Aktivkohle, Bakterien, Pilzen, Algen, einer Biomasse aus Bakterien, Pilzen oder Algen, eines Fällungsmittels, durch Nanofilter und/oder elektrolytisch. Je nach Zusammensetzung und Konditionierung der flüssigen Phase sind die Verfahren zur Schwermetallabtrennung unterschiedlich geeignet und werden vorzugsweise entsprechend danach ausgewählt. Das eingesetzte Verfahren wird auch danach ausgewählt, welche Sorte von Schwermetallen in welcher Konzentration abgetrennt werden soll. Dies kann zum Beispiel daran bemessen werden, welche unerwünschten Schwermetallsorten im anorganischen Sekundärphosphat vorhanden sind und wie viel davon abgetrennt werden soll. Auch müssen die ausgewählten Schwermetalle nicht vollständig abgetrennt werden, gegebenenfalls ist eine teilweise Abtrennung ausreichend, um die gewünschte Schwermetallkonzentration im erzeugten nährstoffreichen Bodensubstrat, beispielsweise unterhalb der Grenzwerte der gültigen Verordnung, zu erhalten. In einer ganz besonders bevorzugten Ausführungsform erfolgt die zumindest teilweise Abtrennung der Schwermetalle durch Fällung. Dazu wird der pH-Wert während der Inkubationszeit und in der teilweise abgetrennten flüssigen Phase kleiner 2 eingestellt. Entweder erfolgt dann die Schwermetallabtrennung durch Hydroxidfällung durch eine pH-Wert-Anhebung, wobei durch Komplexbildner das Ausfallen des ebenfalls gelösten Phosphates in den eingestellten pH-Wertbereich verhindert werden kann. Oder die Schwermetallabtrennung erfolgt durch Sulfidfällung durch Zuführen von beispielsweise H2S, CH4N2S, Na2S.

In einer besonders bevorzugten Ausführungsform erfolgt eine zumindest teilweise Abtrennung der Schwermetalle aus der abgetrennten flüssigen Phase wie vorstehend beschrieben und die so von Schwermetallen gereinigte flüssige Phase wird dem Nährstoffsubstrat zumindest anteilig wieder zugeführt. Vorteil dieser Ausführungsform ist, dass der Anteil an flüssiger Phase des Nährstoffsubstrates höher eingestellt werden kann, jedoch zumindest ein Teil der Schwermetalle ausgeschleust werden.

Im Prozessschritt c) wird mindestens ein Bodensubstrat durch Kompostierung mindestens einer Organik-haltigen Substanz erzeugt. Dazu können die dem Fachmann bekannten Verfahren und Technologien verwendet werden. Je nach Art der eingesetzten Organik-haltigen Substanzen sowie der Verfahrensführung kann die bodenverbessernde Wirkung eingestellt werden. Eine gezielte Bodenverbesserung kann beispielsweise dann erreicht werden, wenn das Bodensubstrat beispielsweise zu einer Steigerung des Humusanteils im Boden, zur Verbesserung der Bodenstruktur und/oder zu einer Verbesserung des Luft- und/oder Wasserhaushalts des Bodens bei Anwendung in der Landwirtschaft führt. Dies kann beispielsweise das Wurzelwachstum fördern, das Bodenleben aktivieren und/oder die Pflanzenvitalität gegen Stresssituationen stimulieren.

Die Kompostierung erfolgt in vorteilhafter Weise auf der Grundlage und unter Ausnutzung der in den Organik-haltigen Substanzen enthaltenem organischen Anteil sowie der vorhandenen Nährstoffe. Dazu können die Organik-haltigen Substanzen im erforderlichen C/N- Mischungsverhältnis (Kohlenstoff zu Stickstoff Mischungsverhältnis) mit anderen Zuschlagstoffen und Strukturmaterialien wie Holz, Grünschnitt, Rindenabfällen vorgemischt werden, um ein weitgehend homogenes Material für die Kompostierung zu erzeugen. In einer bevorzugten Ausführungsform wird dabei ein C : N-Verhältnis von 10 : 1 bis 30 : 1 eingestellt. Das Gemisch wird typischerweise in Mieten aufgesetzt. Während des typischerweise 6- bis 10-wöchigen Rotteprozesses werden die Mieten nach Bedarf umgesetzt, um eine gleichmäßige Verrottung im gesamten aufgesetzten Material zu gewährleisten. Der Rotteprozeß wird im Wesentlichen von zwei Faktoren bestimmt, dem Sauerstoffgehalt und, da die Mikroorganismen ihre Nahrung nur in gelöster Form aufnehmen können, dem Wasser. Bei ständiger Sauerstoffzufuhr wird die organische Masse optimal abgebaut und wertvoller Nähr- und Dauerhumus aufgebaut. In einer bevorzugten Ausführungsform wird der Prozess so gesteuert, dass die beim Abbau mit Sauerstoff freigesetzte Energie die Temperatur in der Kompostmiete derart erhöht, dass dadurch eine Hygienisierung des Materials bereits während der Kompostierung erreicht wird. Maßgeblich für die Abtötung von Pathogenen oder Unkrautsamen in der Kompostierung ist dabei vor allem die Wärmeeinwirkung im Rotteprozess. Hohe Temperaturen über einen andauernden Zeitraum bewirken in Kombination mit der entsprechenden Feuchte die Abtötung von Pathogenen. Darüber hinaus spielen bei der Abtötung von Krankheitserregern auch die mikrobielle Aktivität im Rotteprozess durch Zersetzungsprozesse, antagonistische Wirkungen oder toxische Abbauprodukte der organischen Substanz eine Rolle. Deshalb wird in einer besonders bevorzugten Ausführungsform der Prozess so gesteuert, dass der Rottekörper über mindestens 2 Wochen eine Temperatur von > 55°C bzw. über eine Woche von > 65 °C (60 °C bei geschlossenen Systemen) durchgehend erreicht. Der Temperaturverlauf spiegelt die Intensität der Rotte wider und ist dabei einer der wichtigsten Parameter zur Überwachung. Die Steuerung der Rottevorgänge der offenen Miete (eine bestimmte Lagerform von Schüttgütern) kann über die Kontrolle der genannten Parameter mittels Umsetzung des Materials durch Mietenumsetzer oder Radlader erfolgen. Durch die Umsetzungsvorgänge gelangt dabei kälteres Mantelmaterial der Miete in den Kernbereich, das wärmere nach außen, so daß die Hygienisierung für die gesamte Miete garantiert werden kann. Im Anschluss an den Intensivrotteprozess kann der erzeugte Frischkompost abgesiebt und zur Nachrotte aufgesetzt. Die Nachrottezeit wird von den Anforderungen der jeweiligen geplanten Nutzung des Kompostes bestimmt.

In einer bevorzugten Ausführungsform wird zumindest ein Teil des während oder nach der Inkubationszeit abgetrennten flüssigen Phase (Prozessschritt b)) der Kompostierung insbesondere zur Regulierung des Rotteprozesses zugeführt. Vorteil ist, dass mit dieser wässrigen flüssigen Phase die notwendige Regulierung des Wassergehaltes erfolgen kann. Zum anderen enthält die abgetrennte flüssige Phase, bedingt durch die Reaktion zwischen mindestens einer phosphathaltigen Asche und mindestens einem Reaktionsmittel, gelöste nährstoffhaltige Elemente und/oder Spurenelemente, die so bereits dem sich bildenden Kompost zugeführt werden können. Auch vereinfacht die zumindest anteilige Nutzung der abgetrennten flüssigen Phase bei der Kompostierung die Prozessführung im Vergleich zu einer zumindest anteiligen Nutzung bei der Herstellung der Rohstoffdispersion und Inkubationszeit, wobei bei der Nutzung der abgetrennten flüssigen Phase das veränderte Löseverhalten durch die bereits gelösten Bestandteile zu beachten ist. In einer besonders bevorzugten Ausführungsform wird zumindest ein Teil der in der abgetrennten flüssigen Phase enthaltenen Schwermetalle vor der Zugabe zu dem in Bildung befindlichen Kompost abgetrennt. Dies führt zu einem geringeren Schwermetallgehalt im gebildeten Kompost.

Im Prozessschritt d) des erfindungsgemäßen Verfahrens erfolgt das Zusammenführen des erzeugten Nährstoffsubstrates aus b) und des erzeugten oder in Erzeugung befindlichen Bodensubstrates aus Prozessschritt c). Dabei entsteht das erfindungsgemäße nährstoffreiche Bodensubstrat.

Durch die gezielte Einstellung der Art und der Zusammensetzung des Nährstoffsubstrates und des gebildeten oder in Bildung befindlichen Bodensubstrates sowie der Art und der Intensität des Mischens kann vorteilhafterweise Einfluss auf die noch weiter ablaufende Reaktion, aber auch auf die Eigenschaften des gebildeten nährstoffhaltigen Bodensubstrates genommen werden.

Das Mischgerät kann beispielsweise ein Mischbehälter mit Rührwerk, Wälzmischer, der vorzugsweise auch als Fall-, Trommel- oder Rotationsmischer bezeichnet wird, Schermischer, Zwangsmischer, Pflugscharmischer, Planeten-Mischkneter, Z-Kneter, Sigma-Kneter, Fluidmischer oder Intensivmischer sein. Die Auswahl des geeigneten Mischers hängt insbesondere von der Rieselfähigkeit und von den Kohäsionskräften des Mischgutes ab. Werden keine weiteren Komponenten zugeführt, kann dennoch eine Mischung der aus Prozessschritt b) überführten Rohstoffdispersion erfolgen, beispielsweise zur weiteren Homogenisierung oder zur Verhinderung von Agglomerations- und/oder Aggregationsbildung.

In einer bevorzugten Ausführungsform der Erfindung ist oder wird das Nährstoffsubstrat so eingestellt, dass sie eine Feuchte von kleiner als 50 %, bevorzugt kleiner als 40 % und besonders bevorzugt kleiner als 30 %, enthält. Die bevorzugt erdfeuchte Mischung kann vorzugsweise direkt mit dem Bodensubstrat vermischt werden, wobei sich ein erdfeuchtes nährstoffreiches Bodensubstrat ausbildet. Zudem können verhältnismäßig kostengünstige Mischverfahren bzw. -technologien, wie beispielsweise Scheckenmischer, Wälzmischer, Schermischer, Pflugscharmischer, Planeten-Mischkneter und/oder Intensivmischer, verwendet werden.

In einer anderen ebenfalls bevorzugten Ausführungsform der Erfindung ist oder wird das Nährstoffsubstrat so eingestellt, dass der Anteil der flüssigen Phase größer als 30 %, bevorzugt größer als 50 %, ist und dieses so eingestellte Nährstoffsubstrat wird durch Auf- oder Zusprühen zum gebildeten oder in Bildung befindlichen Bodensubstrat mit dem Bodensubstrat zusammengeführt. In einer besonders bevorzugten Ausführungsform wird das in der flüssigen Phase so eingestellte Nährstoffsubstrat dem in Prozessschritt c) in Bildung befindlichen Bodensubstrat auf- oder zugesprüht. Vorteil dieser Ausführungsform ist, dass das Auf- oder Zusprühen eines so konditioniertes Nährstoffsubstrates eine sehr einfache und kostengünstige Form des Zusammenführens von Nährstoffsubstrat und Bodensubstrat ist und dabei dennoch eine ausreichende Homogenität der Mischung, also des erzeugten nährstoffreichen Bodensubstrates erreicht wird. Zudem wird bei der Bildung des Bodensubstrates ein ausreichend hoher Anteil an Feuchtigkeit benötigt, der so zumindest anteilig durch den hohen Anteil an feuchter Phase im Nährstoffsubstrat geliefert werden kann.

Der Rohstoffdispersion in Prozessschritt a) und/oder dem Nährstoffsubstrat im und/oder nach dem Prozessschritt b) und/oder dem Bodensubstrat in oder nach Prozessschritt c) und/oder dem erzeugten nährstoffhaltigen Bodensubstrat können "weitere Komponenten" zugegeben werden. "Weitere Komponenten" sind hier allgemein solche Stoffe, die die Prozessführung und/oder die Eigenschaften der nährstoffreichen Bodensubstrate verbessern können, so beispielsweise nährstoffhaltige Komponenten, Dispergier- und Entschäumungsmittel, Strukturstoffe, Mittel zur pH-Werteinstellung, Urease-Hemmer, Ammonium-Stabilisatoren, Huminsäure, organische Säuren und/oder Wasser.

So werden in einer bevorzugten Ausführungsform der Erfindung mindestens eine oder mehrere nährstoffhaltige Komponente(n) als weitere Komponenten zugegeben. Nährstoffhaltige Komponenten sind im Sinne der Erfindung vorzugsweise Stoffe, die das Nährstoffangebot für die angebauten Pflanzen liefern oder ergänzen, um das Wachstum und die Entwicklung der Pflanzen zu steuern beziehungsweise zu unterstützen. Die nährstoffhaltigen Komponenten beinhalten beispielsweise Stickstoff (N), Phosphat (P), Kalium (K), Magnesium (Mg), Schwefel (S), lebensnotwendige Spurenelemente einzeln oder in Kombination. Beispielsweise durch die Möglichkeit zur Zugabe von nährstoffhaltigen Komponenten kann die Nährstoffzusammensetzung im Nähstoffsubstrat und/oder dem nährstoffreichen Bodensubstrates besonders genau an die boden- und/oder pflanzenspezifischen Bedürfnisse angepasst werden. Zudem kann dadurch auch die typische Schwankungsbreite der Zusammensetzung der phosphathaltigen Aschen kompensiert werden, um so ein gleichmäßiges nährstoffreiches Bodensubstrat sicherzustellen. In einer besonders bevorzugten Ausführungsform der Erfindung werden Kristallisationsprodukte aus der Phosphorelimination, wie Struvit, Brushit oder hydroxyxlapatitähnliche Ca-P-Phase, in einem Bereich von 1 bis 70 %, bezogen auf den Feststoffgehalt des Nährstoffsubstrates bei Überführung in Prozessschritt d), so zugegeben, dass dadurch ein Nährstoffsubstrat mit einem Gesamt-P2O5-Gehalt (bezogen auf Trockengehalt) von größer als 15 %, einem neutral-ammoniumcitratlöslichen Phosphatanteil von größer 60 % davon und einer Wasserlöslichkeit von kleiner als 30 %, ebenfalls darauf bezogen resultiert. In einer ganz besonderen Ausführungsform der Erfindung werden Kristallisationsprodukte aus der Phosphorelimination im Bereich von 10 bis 40 %, bezogen auf das Nährstoffsubstrat (bezogen auf Trockengehalt), zugegeben, wobei ein Nährstoffsubstrat mit einem Gesamt-P2O5-Gehalt von größer als 15 % (bezogen auf Trockengehalt), mit einem neutral-ammoniumcitratlöslichen Phosphatanteil davon von größer als 85 % und einem wasserlöslichen Phosphatanteil davon von kleiner als 20 % resultieren.

In einer ebenfalls bevorzugten Ausführungsform der Erfindung werden Huminsäure und/oder Fulvosäure und/oder deren Salze (Humate, Fulvate) zugegeben. Diese Stoffe haben vorteilhafterweise wachstumsfördernde Eigenschaften. So wird die Nährstoffaufnahmekapazität der Wurzel wesentlich erhöht und regt somit das Wachstum an. Durch ihre Zugabe werden das Pflanzenwachstum und die Zellbildung gefördert. Sie stimulieren die Zellmembranen sowie die Stoffwechselaktivitäten und erhöhen dadurch die Keimraten. Auch werden wichtige Pflanzenenzyme besonders gut angeregt. Die kräftige Wurzelausbildung unterstützt die Nährstoffaufnahmekapazität. Die so gestärkten Pflanzen sind deutlich weniger anfällig gegen Krankheiten. Durch die Zugabe dieser Stoffe kann die P-Aufnahme der Pflanzen erhöht werden, da es die P-Adsorption des Bodens blockiert und durch Komplexierung von Ca, AI, Fe das Ausfällen von P in schwerlösliche Verbindungen verhindert. Überraschenderweise wurde festgestellt, dass durch Zugabe dieser Stoffe in einem Bereich von 0,1 - 25 % (bezogen auf das nährstoffreiche Bodensubstrat) eine deutliche Steigerung des pflanzenverfügbaren Phosphats im Boden und damit eine erhöhte P-Aufnahme der Pflanzen resultieren. Besonders bevorzugt ist die Zugabe dieser Stoffe in einem Anteil zwischen 0,1 bis 10 % (bezogen auf das nährstoffreiche Bodensubstrat), da bereits in diesem Mengenbereich eine erhebliche Verbesserung der Nährstoffversorgung erreicht wird und folglich die notwendige Nährstoffmenge entsprechend um bis zu 40 % reduziert werden kann. Ganz besonders ist die Zugabe dieser Stoffe in einem Mengenbereich von 0,1 - 5 % (bezogen auf das nährstoffreiche Bodensubstrat), da in diesem Bereich ein besonders günstiges wirtschaftliches Verhältnis zwischen den Kosten für diese Stoffe und den resultierenden verbesserten Eigenschaften resultiert.

In einer weiterhin bevorzugten Ausführungsform der Erfindung werden organische Säuren in fester und/oder flüssiger Form zugegeben. Organische Säuren sind beispielsweise Ascorbinsäure, Essigsäure, Ameisensäure, Gluconsäure, Äpfelsäure, Bernsteinsäure, Oxalsäure, Weinsäure und Zitronensäure. Organische Säuren spielen bei der Phosphataufnahme der Pflanzen aus dem Boden eine wesentliche Rolle. Insbesondere durch das Vorhandensein von organischen Säuren am Wurzelwerk können die Pflanzen ausreichend Phosphat aufnehmen, wobei typischerweise Mikroorganismen diese organischen Säuren im Ökosystem bilden. Überraschenderweise wurde nun festgestellt, dass die Phosphataufnahme der Pflanzen erhöht wird, wenn im zugeführten Düngergranulat bereits anteilig eine oder mehrere organische Säuren bevorzugt in Summe in einem Bereich von 0,1 bis 30 % (bezogen auf das fertige nährstoffreiche Bodensubstrat) integriert sind. Vermutet wird, dass diese mit zugeführten organischen Säuren dadurch vorzugsweise direkt eine vergleichbare Funktion im Wurzelbereich der Pflanze übernehmen, ohne dass diese organischen Säuren erst durch Mikroorganismen erzeugt werden müssen. Bevorzugt sind Zitronensäure, Oxalsäure und/oder Weinsäure einzeln oder in Kombination eingesetzt, da diese organischen Säuren verhältnismäßig kostengünstig und in ausreichenden Mengen verfügbar sind. Besonders bevorzugt ist der Einsatz von Zitronensäure, Oxalsäure und Weinsäure einzeln oder in Kombination in einem Mengenbereich 0,1 % bis 10 % (bezogen auf das fertige nährstoffreiche Bodensubstrat), da die aufnahmeverbessernde Wirkung dieser Säuren im Verhältnis zu den Rohstoffkosten hier besonders günstig ist. Die aufgeführten Anteile an organischen Säuren im nährstoffreichen Bodensubstrat können dabei entweder wie zusätzlich als weitere Komponente zugegeben werden und/oder bei Einsatz organischer Säuren als Reaktionsmittel nach der Reaktion (zumindest anteilig weiter in diesem Mengenbereich) vorliegen und so in das nährstoffreiche Bodensubstrat überführt werden.

Auch können Mittel zur pH-Wert-Einstellung, so beispielsweise Laugen, Hydroxide, basische Salze, Ammoniak oder gebrannter Kalk, als weitere Komponenten zugefügt werden. Dadurch können beispielsweise noch vorhandene Säurereste, beispielsweise bei Einsatz oder Bildung von Säuren, neutralisiert und/oder der pH-Wert des erzeugten Düngemittels gezielt eingestellt werden.

Die erfindungsgemäßen Aspekte, insbesondere Ausführungsformen des erfindungsgemäßen Verfahrens, sollen im Folgenden anhand von Beispielen näher erläutert werden, ohne auf diese Beispiele beschränkt zu sein.

### Figuren

### Kurzbeschreibung der Figuren

- **Fig. 1**: Beschreibung des erfindungsgemäßen Verfahrens in einer grundsätzlichen Ausgestaltung
- **Fig. 2**: Weitere Ausführungsform des erfindungsgemäßen Verfahrens
- **Fig. 3**: Weitere Ausführungsform des erfindungsgemäßen Verfahrens

### Detaillierte Beschreibung der Figuren

**Fig. 1** beschreibt das erfindungsgemäße Verfahren in seiner grundsätzlichen Ausgestaltung. Im Prozessschritt a) wird zunächst aus mindestens einer phosphathaltigen Asche **1** und mindestens einem Reaktionsmittel **2** eine Rohstoffdispersion **5** erzeugt. Die Konsistenz dieser Rohstoffdispersion **5** kann durch eine oder mehrere flüssige Komponenten, so beispielsweise Wasser **3,** eingestellt werden. Auch können weitere Komponenten **4** zugegeben werden. Die einzustellende Konsistenz der Rohstoffdispersion **5** und die Art der zugegebenen weiteren Komponenten **4** richtet sich dabei nach der Ausführungsform der nachfolgenden Prozessschritte, der Konstitution des erzeugten Bodensubstrates **9** und/oder der phosphathaltigen Asche **1** und/oder den gewünschten Eigenschaften des zu erzeugenden nährstoffreichen Bodensubstrates **9.**

Ein so gebildetes Nährstoffsubstrat **6** kann entweder direkt in Prozessschritt d) zum Zusammenführen mit dem gebildeten Bodensubstrat **10** geführt werden.

Alternativ kann ein Teil der flüssigen Phase **7** während oder nach der Inkubationszeit durch eine Fest/Flüssigtrennung abgetrennt werden. Neben der abgetrennten flüssigen Phase **7** resultiert ein konditioniertes, heißt ein Nährstoffsubstrat **6'** mit einem geringeren Anteil an flüssiger Phase. Das so gebildete konditionierte Nährstoffsubstrat **6'** wird dann zum Prozessschritt d) zum Zusammenführen mit dem gebildeten Bodensubstrat **10** geführt.

Aus der abgetrennten flüssigen Phase kann eine zumindest teilweise Abtrennung von Schwermetallen erfolgen, wodurch eine schwermetallabgereicherte flüssige Phase 7' und ein abgetrennter Schadstoff **8** resultieren. Die abgetrennten Schwermetalle **8** werden aus dem Prozess ausgeschleust.

Im Prozessschritt c) wird durch Kompostierung ein Bodensubstrat **10** aus mindestens einer Organik-haltigen Substanz **9** erzeugt.

Im Prozessschritt d) werden mindestens ein gebildetes oder in Bildung befindliches Bodensubstrat **10** und mindestens ein Nährstoffsubstrat **6, 6'** zusammengeführt und das erfindungsgemäße nährstoffreiche Bodensubstrat **11** gebildet. Das Zusammenführen des (konditionierten) Nährstoffsubstrates **6, 6'** kann während oder nach der Bildung des Bodensubstrates **10** erfolgen.

Der Rohstoffdispersion **5** in oder nach Prozessschritt a) und/oder dem Nährstoffsubstrat **6** im und/oder nach dem Prozessschritt b) und/oder dem Bodensubstrat **10** in oder nach Prozessschritt c) und/oder dem erzeugten nährstoffhaltigen Bodensubstrat **11** können weitere Komponenten **4,** die die Prozessführung und/oder die Eigenschaften des nährstoffreichen Bodensubstrates **11** verbessern können, zugegeben werden.

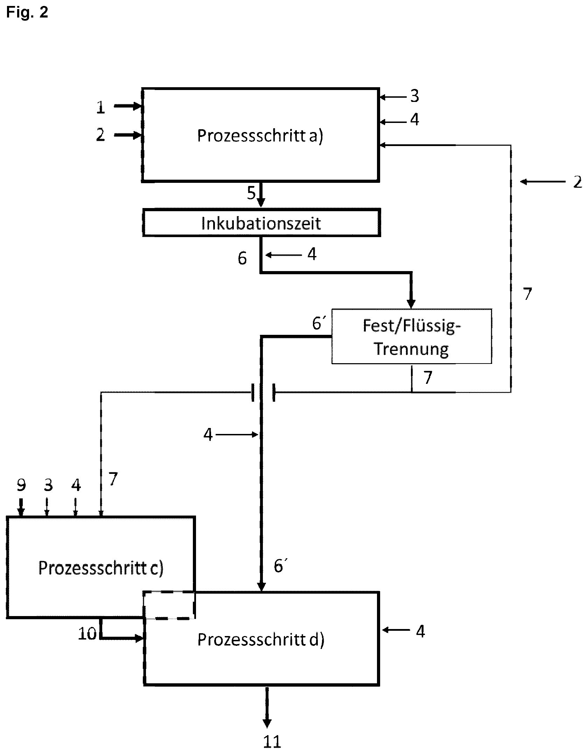

**Fig. 2** beschreibt eine bevorzugte Ausführungsform des vorgeschlagenen Verfahrens, bei der ein Teil der flüssigen Phase aus der gebildeten Nährstoffdispersion **6** abgetrennt wird. Dazu wird erneut wie in **Fig. 1** beschrieben eine Rohstoffdispersion **5** erzeugt und eine Inkubationszeit von mindestens 10 Minuten eingehalten, wodurch das erfindungsgemäße Nährstoffsubstrat **6** gebildet wird.

Ein Teil der flüssigen Phase **7** wird während oder nach der Inkubationszeit abgetrennt. Neben der abgetrennten flüssigen Phase **7** resultiert ein konditioniertes, heißt einen geringeren Anteil an flüssiger Phase enthaltenes, Nährstoffsubstrat **6'.**

Die abgetrennte flüssige Phase **7** kann zumindest anteilig dem Prozessschritt a) zur Herstellung einer Rohstoffdispersion **5** zurückgeführt und/oder Prozessschritt c) zur Herstellung der Bodensubstrate zugeführt werden. Erfolgt die zumindest anteilige Rückführung zu Prozessschritt a), kann dieser zurückgeführten flüssigen Phase **7** auch bereits zumindest anteilig das Reaktionsmittel **2** zugeführt werden, wodurch ein Ausfällen gelöster Bestandteile gegebenenfalls vermieden werden kann.

Im Prozessschritt c) wird durch Kompostierung ein Bodensubstrat **10** aus mindestens einer Organik-haltigen Substanz erzeugt. Dabei kann die abgetrennte flüssige Phase **7** zumindest anteilig zugeführt werden, um beispielsweise den Wassergehalt bei der Kompostierung zu regeln.

Im Prozessschritt d) wird mindestens ein Bodensubstrat **10** und mindestens ein Nährstoffsubstrat **6'** zusammengeführt und das erfindungsgemäße nährstoffreiche Bodensubstrat **11** gebildet.

Der Rohstoffdispersion **5** in oder nach Prozessschritt a) und/oder dem Nährstoffsubstrat **6** im und/oder nach dem Prozessschritt b) und/oder dem Bodensubstrat **10** in oder nach Prozessschritt c) und/oder dem erzeugten nährstoffhaltigen Bodensubstrat **11** können weitere Komponenten **4,** die die Prozessführung und/oder die Eigenschaften des nährstoffreichen Bodensubstrates **11** verbessern können, zugegeben werden.

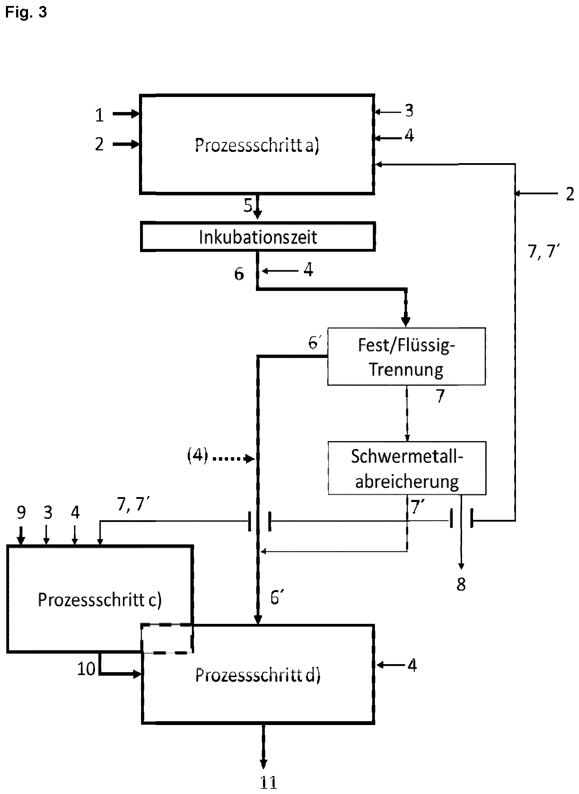

**Fig. 3** beschreibt eine weitere bevorzugte Ausführungsform des vorgeschlagenen Verfahrens, bei der ein Teil der flüssigen Phase aus der gebildeten Nährstoffdispersion **6** abgetrennt wird und zumindest ein Teil der Schwermetalla aus der abgetrennten flüssigen Phase abgesondert werden. Dazu wird erneut, wie in **Fig. 2** beschrieben, eine Rohstoffdispersion **5** erzeugt, eine Inkubationszeit von mindestens 10 Minuten eingehalten, wodurch das erfindungsgemäße Nährstoffsubstrat **6** gebildet wird und ein Teil der flüssigen Phase **7** während oder nach der Inkubationszeit abgetrennt. Neben der abgetrennten flüssigen Phase **7** resultiert ein konditioniertes, heißt einen geringeren Anteil an flüssiger Phase enthaltenes, Nährstoffsubstrat **6'.**

Aus der abgetrennten flüssigen Phase **7** erfolgt eine zumindest teilweise Abtrennung von Schwermetallen. Es resultiert daraus eine schwermetallabgereicherte flüssige Phase **7'.** Die abgetrennten Schwermetalle **8** werden aus dem Prozess ausgeschleust.

Die abgetrennte flüssige Phase mit der zumindest teilweisen Schwermetallabtrennung **7'** kann zumindest anteilig dem Prozessschritt a) zur Herstellung einer Rohstoffdispersion **5** zurückgeführt und/oder Prozessschritt c) zur Herstellung der Bodensubstrate zugeführt werden. Erfolgt die zumindest anteilige Rückführung zu Prozessschritt a) kein dieser zurückgeführten flüssigen Phase auch bereits zumindest anteilig das Reaktionsmittel zugeführt werden, wodurch ein Ausfällen gelöster Bestandteile gegebenenfalls vermieden werden kann.

Die abgetrennte flüssige Phase mit zumindest teilweisen Schwermetallabtrennung **7'** kann zudem zumindest teilweise auch dem konditionierten Nährstoffsubstrat **6',** heißt dem Nährstoffsubstrat mit teilweise abgetrennter flüssigen Phase, wieder zugeführt werden, wodurch der Schwermetallgehalt im Nährstoffsubstrat geringer ist als vor der teilweisen Abtrennung der flüssigen Phase **7.**

Gemäß der **Fig. 2** erfolgt im Prozessschritt c) die Erzeugung eines Bodensubstrats **10** durch Kompostierung, wobei die schwermetallabgereicherte flüssige Phase **7'** zumindest anteilig zugeführt werden kann. Im Prozessschritt d) wird analog zu **Fig. 2** mindestens ein Bodensubstrat **10** und mindestens ein Nährstoffsubstrat **6'** zusammengeführt und das erfindungsgemäße nährstoffreiche Bodensubstrat **11** gebildet.

Der Rohstoffdispersion **5** in oder nach Prozessschritt a) und/oder dem Nährstoffsubstrat **6** im und/oder nach dem Prozessschritt b) und/oder dem Bodensubstrat **10** in oder nach Prozessschritt c) und/oder dem erzeugten nährstoffhaltigen Bodensubstrat **11** können weitere Komponenten **4,** die die Prozessführung und/oder die Eigenschaften des nährstoffreichen Bodensubstrates **11** verbessern, zugegeben werden.

### Bezugszeichenliste

- 1: phosphathaltige Asche
- 2: Reaktionsmittel
- 3: Wasser
- 4: weitere Komponenten
- 5: Rohstoffdispersion
- 6: Nährstoffsubstrat
- 6': Nährstoffsubstrat mit reduzierter flüssiger Phase
- 7: abgetrennte flüssige Phase
- 7': schwermetallabgereicherte flüssige Phase
- 8: abgetrennter Schadstoff
- 9: organische Substanz
- 10: Bodensubstrat
- 11: nährstoffreiches Bodensubstrat

## Patentansprüche

1. Nährstoffreiches Bodensubstrat (11) herstellbar mit einem Verfahren umfassend die Schritte:
a) Erzeugung einer Rohstoffdispersion (5) durch das Vermischen mindestens einer phosphathaltigen Asche (1) und mindestens eines Reaktionsmittels (2);
b) Bildung eines Nährstoffsubstrates (6) durch Einhalten einer Inkubationszeit zwischen der phosphathaltigen Asche (1) und dem Reaktionsmittel (2) von mindestens 10 Minuten,
▪ wobei ein Teil einer flüssigen Phase (7) nach der Inkubationszeit abgetrennt werden kann,
▪ wobei zumindest ein teilweises Absondern von Schwermetallen (8) aus der abgetrennten flüssigen Phase (7) sowie eine Ausschleusung dieser Schwermetalle (8) aus dem Prozess erfolgen kann und
▪ wobei die abgetrennte flüssige Phase (7, 7') zumindest anteilig in den Prozessschritt a) zur Herstellung der Rohstoffdispersion (5) zurückgeführt oder in den Prozessschritt c) zur Kompostierung zugeführt werden kann;
c) Erzeugung mindestens eines Bodensubstrates (10) durch Kompostierung von mindestens einer Organik-haltigen Substanz;
d) Erzeugung des nährstoffreichen Bodensubstrats (11) durch Zusammenführen des erzeugten Nährstoffsubstrates (6, 6') aus b) und des erzeugten oder in Erzeugung befindlichen Bodensubstrates (10 aus c), wobei das Zusammenführen während der Erzeugung des Bodensubstrates (10) oder im Anschluss erfolgen kann;
e) Wiederholen der Prozessschritte a) bis d).

2. Verfahren zur Herstellung eines nährstoffreichen Bodensubstrats (11) umfassend die folgenden Schritte:
a) Erzeugung einer Rohstoffdispersion (5) durch das Vermischen mindestens einer phosphathaltigen Asche (1) und mindestens eines Reaktionsmittels (2);
b) Bildung eines Nährstoffsubstrates (6) durch Einhalten einer Inkubationszeit zwischen der phosphathaltigen Asche (1) und dem Reaktionsmittel (2) von mindestens 10 Minuten,
▪ wobei ein Teil einer flüssigen Phase (7) nach der Inkubationszeit abgetrennt werden kann,
▪ wobei zumindest ein teilweises Absondern von Schwermetallen (8) aus der abgetrennten flüssigen Phase (7) sowie eine Ausschleusung dieser Schwermetalle (8) aus dem Prozess erfolgen kann und
▪ wobei die abgetrennte flüssigen Phase (7, 7') zumindest anteilig in den Prozessschritt a) zur Herstellung der Rohstoffdispersion (5) zurückgeführt oder in den Prozessschritt c) zur Kompostierung zugeführt werden kann;
c) Erzeugung mindestens eines Bodensubstrates (10) durch Kompostierung von mindestens einer Organik-haltigen Substanz;
d) Erzeugung des nährstoffreichen Bodensubstrats (11) durch Zusammenführen des erzeugten Nährstoffsubstrates (6, 6') aus b) und des erzeugten oder in Erzeugung befindlichen Bodensubstrates (10 aus c), wobei das Zusammenführen während der Erzeugung des Bodensubstrates (10) oder im Anschluss erfolgen kann;
e) Wiederholen der Prozessschritte a) bis d).

3. Vorrichtung zur Herstellung von nährstoffreichen Bodensubstraten (11) nach einem der vorangehenden Ansprüchen 1 oder 2, umfassend
▪ einen ersten Mischbehälter zur Zuführung und/oder Mischung zumindest der phosphorhaltigen Asche (1) und des Reaktionsmittels (2), wodurch eine Rohstoffdispersion (5) erhalten wird, wobei für die Inkubationszeit entweder der erste Mischbehälter genutzt und das Nährstoffsubstrat (6, 6') gebildet wird und/oder weitere Behälter vorhanden sind, in die die Rohstoffdispersion (5) für die Inkubationszeit überführt und gemischt wird,
▪ optional eine Abtrenneinheit zur Abtrennung zumindest eines Teils der flüssigen Phase (7, 7') vom gebildeten Nährstoffsubstrat (6, 6'), wobei die Abtrenneinheit in dem ersten Mischbehälter integriert oder davon separat sein kann und eine Rückführeinheit für die abgetrennte flüssige Phase (7, 7') zur Herstellung einer Rohstoffdispersion (5) analog Prozessschritt a) und/oder zur Erzeugung eines Bodensubstrates (10) gemäß Prozessschritt c), wobei zusätzlich eine Reinigungseinheit zur zumindest teilweisen Abtrennung von Schwermetallen (8) aus der abgetrennten flüssigen Phase (7, 7') vorhanden sein kann,
▪ eine Mischeinheit zum Zusammenführen des erzeugten Bodensubstrates (10) und des erzeugten Nährstoffsubstrates (6, 6') zur Bildung des nährstoffreichen Bodensubstrates (11) .
